# EUROPEAN PATENT SPECIFICATION

(11) **EP 4 147 466 B1**
(45) Date of publication and mention of the grant of the patent: **25.11.2026**
(21) Application number: 20725677.7
(22) Date of filing: 07.05.2020
(51) Int. Cl.: H04W 4/40, H04W 4/02, H04L 41/5009, H04L 41/0894

(54) **CONTROLLING V2X MESSAGE DISTRIBUTION**
STEUERUNG DER VERTEILUNG VON V2X-NACHRICHTEN
CONTRÔLE DE DISTRIBUTION DE MESSAGE V2X

(43) Date of publication of application: 15.03.2023
(73) Proprietor: Lenovo (Singapore) Pte. Ltd., Singapore 556741 (SG)
(72) Inventor: PATEROMICHELAKIS, Emmanouil, 81245 Munich (DE)
(74) Representative: Openshaw & Co.
(86) International application number: PCT/EP2020/062675
(87) International publication number: WO 2021/223866

(56) References cited:
- US-A1- 2018 249 525
- US-A1- 2018 249 525
- US-A1- 2020 021 941
- "3rd Generation Partnership Project; Technical Specification Group Services and System Aspects; Study on enhancements to application layer support for V2X services; (Release 17)", 13 March 2020 (2020-03-13), XP051896874, Retrieved from the Internet <URL:https://ftp.3gpp.org/tsg_sa/WG6_MissionCritical/Latest_draft_SA6_Specs/archive/23764-050.zip 23764-050-rm.doc> [retrieved on 20200313]
- "3rd Generation Partnership Project; Technical Specification Group Services and System Aspects; Study on enhancements to application layer support for V2X services; (Release 17)", 13 March 2020 (2020-03-13), XP051896874, Retrieved from the Internet <URL:https://ftp.3gpp.org/tsg_sa/WG6_MissionCritical/Latest_draft_SA6_Specs/archive/23764-050.zip 23764-050-rm.doc> [retrieved on 20200313]

## Description

### FIELD

The subject matter disclosed herein relates generally to wireless communications and more particularly relates to controlling V2X message distribution among a group of V2X UEs, for example by distributing and applying a V2X configuration policy. There is disclosed herein a method performed by a vehicle-to-everything, V2X, user equipment, UE, and a V2X UE.

### BACKGROUND

The following abbreviations are herewith defined, at least some of which are referred to within the following description: Third Generation Partnership Project ("3 GPP"), Fifth Generation Core Network ("5CG"), Fifth Generation System ("5GS"), Fifth Generation QoS Identifiers ("5QI"), Authentication, Authorization and Accounting ("AAA"), Advanced Intersection Collision Warning ("AICW"), Access and Mobility Management Function ("AMF"), Positive-Acknowledgment ("ACK"), Application Programming Interface ("API"), Access Stratum ("AS"), Base Station ("BS"), Category of Requirements ("CoR"), Control Element ("CE"), Cooperating merging ("CM"), Cooperative Overtaking ("CO"), Cooperating Transition of Control ("CToC"), Cooperative Lane Change ("CLC"), Collective Perception ("CP"), Collective Perception Message ("CPM"), Core Network ("CN"), Connected and Autonomous Vehicle ("CAV"), Decentralized Environmental Notification Message ("DENM"), Downlink ("DL"), Discontinuous Transmission ("DTX"), Evolved Node-B ("eNB"), Evolved Packet Core ("EPC"), Evolved Packet System ("EPS"), Evolved UMTS Terrestrial Radio Access ("E-UTRA"), Evolved UMTS Terrestrial Radio Access Network ("E-UTRAN"), European Telecommunications Standards Institute ("ETSI"), General Packet Radio Service ("GPRS"), Generic Public Service Identifier ("GPSI"), Global System for Mobile Communications ("GSM"), Hybrid Automatic Repeat Request ("HARQ"), Home Subscriber Server ("HSS"), Information Element ("IE"), Internet-of-Things ("IoT"), International Mobile Equipment Identity ("IMEI"), Intelligent Transportation System ("ITS"), ITS Station ("ITS-S"), Infrastructure to Vehicle Information Message ("IVIM"), Key Performance Indicator ("KPI"), Level of Automation ("LoA"), Long Term Evolution ("LTE"), Mobility Management ("MM"), Mobility Management Entity ("MME"), Map (topology) Extended Message ("MAPEM"), Maneuver Control ("MC"), Maneuver Control Message ("MCM"), Negative-Acknowledgment ("NACK") or ("NAK"), New Generation (5G) Node-B ("gNB"), New Generation Radio Access Network ("NG-RAN", a RAN used for 5GS networks), New Radio ("NR", a 5G radio access technology; also referred to as "5G NR"), Non-Access Stratum ("NAS"), Network Slice Selection Assistance Information ("NSSAI"), Overtaking Vehicle Warning ("OVW"), Packet Data Unit ("PDU", used in connection with 'PDU Session'), PC5 5QI ("PQI"), Permanent Equipment Identifier ("PEI"), Platoon Control ("PC"), Platoon Control Message ("PCM"), Proximity Service ("ProSe"), Public Land Mobile Network ("PLMN"), Quality of Service/Experience ("QoS"), Radio Access Network ("RAN"), Receive ("RX"), Road Side Unit ("RSU"), Service Enabler Architecture Layer ("SEAL"), Session Management ("SM"), Session Management Function ("SMF"), Service Provider ("SP"), Single Network Slice Selection Assistance Information ("S-NSSAI"), Signal Phase And Timing Extended Message ("SPATEM"), Signal Request Extended Message ("SREM"), Signal request Status Extended Message ("SSEM"), Target Driving Area Reservation ("TDAR"), Transport Block ("TB"), Transmit ("TX"), Vehicle-to-Everything ("V2X"), Vehicle-to-Infrastructure ("V2I"), Vehicle-to-Vehicle ("V2V"), Vehicle-to-Relay ("V2R"), V2X Application Enabler ("VAE"), Vulnerable Road User Protection ("VRUP"), Unified Data Management ("UDM"), User Data Repository ("UDR"), User Entity/Equipment (Mobile Terminal) ("UE"), Uplink ("UL"), User Plane ("UP"), Universal Mobile Telecommunications System ("UMTS"), UMTS Terrestrial Radio Access ("UTRA"), UMTS Terrestrial Radio Access Network ("UTRAN"), User Service Description ("USD"), and Worldwide Interoperability for Microwave Access ("WiMAX"). As used herein, "HARQ-ACK" may represent collectively the Positive Acknowledge ("ACK") and the Negative Acknowledge ("NACK") and Discontinuous Transmission ("DTX"). ACK means that a TB is correctly received while NACK (or NAK) means a TB is erroneously received. DTX means that no TB was detected.

In certain wireless communication systems, V2X communication is supported using unicast communication over PC5. However, as of 3GPP Release 15, no link layer mechanism exists for unicast communications over PC5.

US 2018/249,525 A1 describes vehicle-to-vehicle communication performed using a first radio technology for performing the vehicle-to-vehicle communication and a second radio technology for accessing a cellular network and a distribution scheme for distributing a transmission of vehicle-to-vehicle communication messages among the first radio technology and the second radio technology.

3GPP Technical Specification 23.764 v0.5.0 is a technical report which identifies enhancements for application architecture to support V2X services.

US 2020/021,941 A1 describes a UE that may determine whether a peer-to-peer (P2P) communication is to be relayed based at least in part on a location of the UE and a range requirement associated with the P2P communication.

### BRIEF SUMMARY

The invention is defined by the appended claims. Further embodiments are defined by the dependent claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for controlling V2X message distribution;
Figure 2 is a diagram illustrating one embodiment of a network architecture of a configuration phase for V2X message distribution control;
Figure 3 is a diagram illustrating one embodiment of a network architecture for an operation phase for V2X message distribution control;
Figure 4 is a diagram illustrating one embodiment of a bundled V2X container for use with V2X message distribution control;
Figure 5 is a diagram illustrating signaling flow for a configuration phase for V2X message distribution control;
Figure 6 is a diagram illustrating signaling flow for an operation phase for V2X message distribution control;
Figure 7 is a diagram illustrating signaling flow for V2X broadcast configuration using UE-to-UE virtual user graphs;
Figure 8A is a diagram illustrating a UE-to-UE virtual user graph based on service coverage, without the use of relays;
Figure 8B is a diagram illustrating a UE-to-UE virtual user graph based on service coverage, with the use of relays;
Figure 9A is a flowchart diagram illustrating a configuration phase for V2X message distribution using a UE-to-UE graph based on service coverage;
Figure 9B continues the flowchart of Figure 9A;
Figure 10 is a diagram illustrating one embodiment of a user equipment apparatus that may be used for controlling V2X message distribution;
Figure 11 is a flowchart diagram illustrating one embodiment of a method that may be used for controlling V2X message distribution; and
Figure 12 is a flowchart diagram illustrating one embodiment of a method that may be used for controlling V2X message distribution.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, nontransitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an objectoriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus for controlling V2X message distribution for UEs engaged in V2X communication. Disclosed herein are mechanisms/techniques for configuring and transmitting groupcast (alternatively, broadcast) V2X and/or eV2X application messages (e.g., CPM, PCM, MCM, DENM, etc.) to ensure meeting the communication service requirements, while at the same time avoiding the V2X message broadcast flood. These mechanisms/techniques are applicable to single hop V2V transmissions, as well as for scenarios when the communication among vehicles requires to be relayed via intermediate vehicles.

The V2X services described in 3GPP TS 22.186, require ultra-reliable and low latency characteristics, and may require high data rates due to the very high expected payloads. The Categories of Requirements ("CoR") and Level of Automation ("LoA") are defined, which reflects the functional aspects of the technology and affects the system performance requirements, are defined to support such V2X scenarios.

Some of the V2X use cases / CoRs related to Vehicle-to-Vehicle ("V2V") communications includes General Aspects, Vehicle Platooning, Advanced Driving, and Extended Sensors. Furthermore, the following LoAs are defined which may apply for different use case: No Automation (0); Driver Assistance (1); Partial Automation (2); Conditional Automation (3); High Automation (4); and Full Automation (5).

For the combination of each scenario and each degree of LoA, requirements are specified in terms of: Payload (Bytes), Transmission rate (Message/Sec), Maximum end-to-end latency (ms), Reliability (%), Data rate (Mbps), Minimum required communication range (meters). Note that V2X scenarios are delay and reliability critical, while the rate (and thus the resource) requirement may vary, because they may support different payloads (e.g., from 300 Bytes to 12000 Bytes) under the strict delay requirement.

In parallel with 3GPP, ETSI ITS has provided application requirements and mechanisms for enabling the cellular-assisted communication among vehicles in V2X communications for both safety and traffic efficiency related applications.

Some of the applications which are considered in C-ITS are the following:
Platoon: This use case is based on the use of V2X for trucks to operate safely as a platoon on a highway implementing longitudinal and/or lateral control depending on the level of automation supported by the interested vehicles.

Target Driving Area reservation (TDAR) for a vehicle that is going to perform a maneuver aimed at occupying a given road section: this use case provides the possibility to notify other vehicles about the maneuver imminent occurrence.

Co-operative merging (CM) assistance: This use case considers that CAVs involved in a merging negotiate together the merging process to avoid collision. The road infrastructure can in special case participate in the coordination process.

Cooperative overtaking (CO): This use case considers that the CAVs involved in an overtaking negotiate together the maneuvering process to avoid collision.

Cooperative Transition of Control (CTOC): CAVs can cooperate in organizing a transition of control such that minimizes the risks. The road infrastructure may participate in this cooperation by suggesting time or space where to safely trigger a transition of control ("ToC").

Cooperative lane change (CLC): This use case considers that CAVs involved in a lane change negotiate together the maneuvering process to avoid collision. The road infrastructure may, in special case, participate in the coordination process.

Vulnerable Road User Protection (VRUP): Provides warning to vehicles of the presence of vulnerable road users, e.g., pedestrian or cyclist, in case of dangerous situation. For Day 1 application, the infrastructure may recognize the risk and send notifications to vehicles. For Day 2 application, vehicles and infrastructure may share information about pedestrians or cyclists detected via local sensors, and let receiving vehicles detect the occurrence of risky situations associated to VRU presence.

Overtaking vehicle warning (OVW): An overtaking vehicle detects the risk of collision thanks to information about vehicles coming from the other direction, which are detected by other vehicles.

Advanced Intersection Collision Warning (AICW): By receiving information about non-cooperative vehicles detected by environmental sensors, vehicle can detect the risk of an intersection collision and warn the driver accordingly.

The above applications which require the communication among groups of vehicles ("V2V"), or vehicle to infrastructure ("V2I") are, by nature, group based. Note that the relation between V2X applications and V2X services is not necessarily 1:1, but can be N:M. For example, one V2X application may comprise multiple/combination of services. As another example, a V2x service may involve one or more V2X applications. To assist the control of the V2X use cases / service, some messages need to be exchanged in application layer between applications running the service.

Some characteristic messages to be exchanged between applications running the service include:
A. Platooning Control Message ("PCM"): Per ETSI TR 103 298, the PCM can be perceived as the 'heartbeat' of the platooning application. Platooning refers to cooperative driving where autonomous/semi-autonomous vehicles move on the same lane in a train-like manner, keeping a small constant inter-vehicle distance. The PCM contains all necessary data for controlling the vehicle both longitudinally as well as laterally to enable safe platooning.

In one example, a PCM may be transmitted after a successful join procedure. In another example, a PCM may be sent from the leading vehicle to one or more following vehicles. In various embodiments, no positive acknowledgements (ACK) are used with PCM, but instead implicit ACKs are used. For example, a vehicle in the platoon can expect a new message from all platoon member around every 50 ms period. Thus, if several consecutive packets are missing from a vehicle, said vehicle has to adapt its behavior to a new situation.

B. Collective Perception Message ("CPM"): Per ETSI TS 103 324, the sending of CPMs comprises the generation and transmission of CPMs. In the course of CPM generation, the originating ITS-S composes the CPM, which is then delivered to the ITS networking & transport layer for dissemination. The dissemination of CPMs may vary depending on the applied communication system. CPMs are sent by the originating ITS-S to all ITS-Ss within the direct communication range. This range may, inter alia, be influenced in the originating ITS-S by changing the transmit power depending on the relevance area.

CPMs are generated periodically with a rate controlled by the CP service in the originating ITS-S. The generation frequency is determined by taking into account the dynamic behavior of the detected object status, e.g., change of position, speed, or direction, sending of CPMs for the same (perceived) object by another ITS-S, as well as the radio channel load. Upon receiving a CPM, the CP service makes the content of the CPM available to the ITS applications and/or to facilities within the receiving ITS-S, such as a Local Dynamic Map (LDM).

A CPM may include an ITS PDU header and at least one CPM parameter. Thus, CPM contents may include a management container, station data container (i.e., with an originating vehicle container and/or originating Road Side Unit ("RSU") container, and a perception data container. The perception data container may contain one or more sensor information containers, one or more perceived object containers, and/or one or more free space addendum containers.

### C. Maneuver Control Message ("MCM"): Per ETSI TR 103 578, all

All Connected and Autonomous Vehicles ("CAVs") continuously broadcast a Maneuver Coordination Message (MCM) including the "planned trajectory." In this way, a CAV can compare its planned trajectory with the received trajectories and compute if these intersect. In that case, vehicles without the right of way will need to modify their planned trajectories.

In order to negotiate a coordination of maneuvers, a new trajectory is introduced in the MCM and referred to as "desired trajectory." A CAV that detects a need for coordination can send a desired trajectory together with the planned trajectory. At the receiving side, the presence of a desired trajectory is interpreted as a request for coordination.

Any CAV that receives a desired trajectory will determine if it is capable of modifying its planned trajectory to allow the transmitting CAV to follow its desired trajectory. In case of holding the right of way, the receiving CAV has to also determine if it is willing to leave way. If the receiving vehicle agrees with the coordination, it will modify its planned trajectory accordingly.

Once the transmitting vehicle receives the new planned trajectories from the surrounding CAVs, its desired trajectory will become its new planned trajectory in the MCM. Note that this can imply a cascade process where, in order to allow a desired trajectory of another CAV, a CAV must send a desired trajectory itself.

Apart from the aforementioned V2X messages which may be required for eV2X services, there are also many V2X messages related to safety and efficiency like: Decentralized Environmental Notification Message ("DENM," defined in ETSI EN 302 637-3), Signal Phase And Timing Extended Message ("SPATEM," defined in ETSI TS 103 301), Map (topology) Extended Message ("MAPEM," defined in ETSI TS 103 301), ("IVIM," defined in ETSI TS 103 301), Signal Request Extended Message ("SREM," defined in ETSI TS 103 301), Signal request Status Extended Message ("SSEM," defined in ETSI TS 103 301). As used herein, eV2X ("enhanced V2X") service refers to V2X service based on the services defined for 5G (e.g., advanced driving, extended sensor sharing etc.). In contrast the basic V2X services defined in 3GPP for 4G are V2X services, but not "eV2X" services.

Below, Table 1 is provided to show the relation between V2X control messages as mentioned above and the V2X application which use these messages, as well as the relation with 3GPP defined use cases.

**Table 1**

| V2X message | V2X application | 3GPP V2X service type (TS 22.186) |
|---|---|---|
| PCM | Platoon | Vehicle Platooning |
| MCM | • Target Driving Area reservation | Advanced Driving |
| | • Co-operative merging | • Cooperative collision avoidance between UEs supporting V2X applications |
| | • Cooperative overtaking | |
| | • Cooperative Transition of Control | |
| | • Cooperative lane change | • Emergency trajectory alignment between UEs supporting V2X application. |
| | | • Cooperative lane change between UEs supporting V2X applications) |
| CPM | • Vulnerable Road User Protection | Extended Sensor Sharing |
| | • Overtaking vehicle warning | |
| | • Advanced Intersection Collision Warning | |

For the communication of such V2X and eV2X applications, due to the fact that the communication range for reaching all vehicle in a service area, one or multiple application relays need to be used to extend the coverage of the V2X services so as to reach even users out of the coverage of the ego / lead vehicle. For this reason, Road Side Units ("RSU") may be used to relay traffic. An RSU may be a base station or a vehicle.

There are two main challenges related to the broadcast of V2X application messages showcased above, especially in dense scenarios (e.g., urban environment); and considering the fact that the evolution towards fully automated vehicles will increase significantly the complexity and signaling required for inter-vehicle exchange.

First, the successful reception of a safety/efficiency related message (PCM, MCM, CPM, DENM, etc.) by all the vehicles in vicinity (or by a group of affected vehicles), needs to be guaranteed. For safety-related application, the unsuccessful reception may lead to accidents. To solve this, more conservative policies can be used (resource overprovisioning, relaying)

Second, the uncoordinated broadcast of application messages, by different sources which may use the same frequencies or radio capabilities, may lead to V2X message broadcast flood. This issue is more critical in scenarios when these messages are relayed via one or multiple application relays to receiving vehicles.

Accordingly, the present disclosure addresses how to ensure that the V2X messages will be received by all users which require such information for one or more safety/efficiency related applications, while preventing a V2X message broadcast flood.

To this end, a novel functionality is disclosed at a V2X middleware layer (can be seen as application enabling function on top of the communication part) at one or more V2X UEs, which is configured to control the way that the V2X/eV2X message transmission/reception is configured for one or multiple V2X applications, taking into account the application requirements (service coverage, required min/max range, KPIs, application to service mapping, applications re-using the same V2X message, candidate relay UEs), traffic/radio conditions and the vehicle location information.

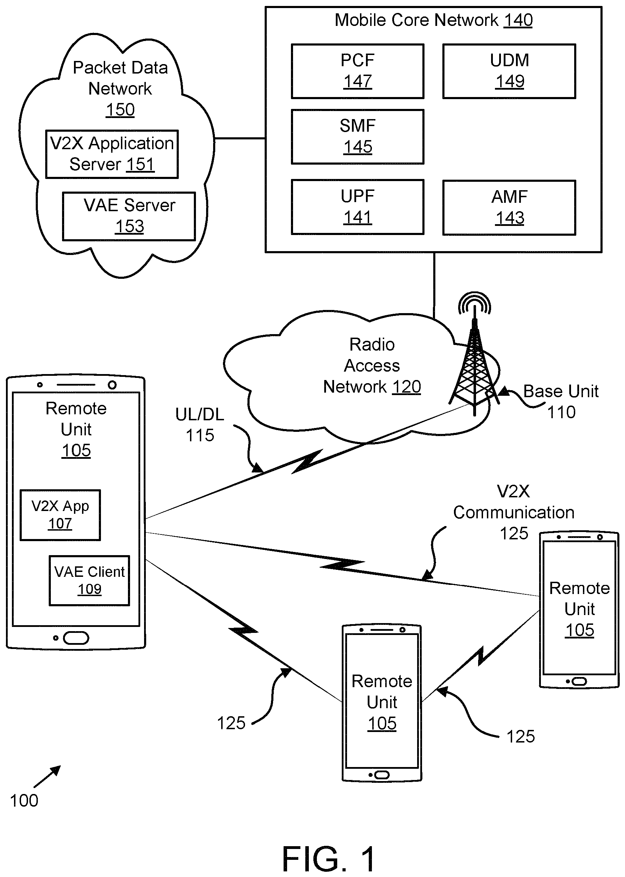

Figure 1 depicts a wireless communication system 100 for conveying unicast sessions over a direct communication link via V2X communication signals 125, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 110 with which the remote unit 105 communicates using wireless communication links 115. Even though a specific number of remote units 105, base units 110, wireless communication links 115, RANs 120, and mobile core networks 140 are depicted in Figure 1, one of skill in the art will recognize that any number of remote units 105, base units 110, wireless communication links 115, RANs 120, and mobile core networks 140 may be included in the wireless communication system 100.

In one implementation, the RAN 120 is compliant with the 5G system specified in the 3GPP specifications. In another implementation, the RAN 120 is compliant with the LTE system specified in the 3GPP specifications. More generally, however, the wireless communication system 100 may implement some other open or proprietary communication network, for example WiMAX, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art.

The remote units 105 may communicate directly with one or more of the base units 110 in the RAN 120 via uplink ("UL") and downlink ("DL") communication signals. Furthermore, the UL and DL communication signals may be carried over the wireless communication links 115. Here, the RAN 120 is an intermediate network that provides the remote units 105 with access to the mobile core network 140.

In some embodiments, the remote units 105 communicate with a communication host (e.g., application server) via a network connection with the mobile core network 140. For example, an application 107 (e.g., web browser, media client, telephone/VoIP application) in a remote unit 105 may trigger the remote unit 105 to establish a PDU session (or other data connection) with the mobile core network 140 via the RAN 120. The mobile core network 140 then relays traffic between the remote unit 105 and the application server in the packet data network 150 using the PDU session. Note that the remote unit 105 may establish one or more PDU sessions (or other data connections) with the mobile core network 140. As such, the remote unit 105 may concurrently have at least one PDU session for communicating with the packet data network 150 and at least one PDU session for communicating with another data network (not shown).

The base units 110 may be distributed over a geographic region. In certain embodiments, a base unit 110 may also be referred to as an access terminal, an access point, a base, a base station, a Node-B, an eNB, a gNB, a Home Node-B, a relay node, or by any other terminology used in the art. The base units 110 are generally part of a radio access network ("RAN"), such as the RAN 120, that may include one or more controllers communicably coupled to one or more corresponding base units 110. These and other elements of radio access network are not illustrated but are well known generally by those having ordinary skill in the art. The base units 110 connect to the mobile core network 140 via the RAN 120.

The base units 110 may serve a number of remote units 105 within a serving area, for example, a cell or a cell sector, via a wireless communication link 115. The base units 110 may communicate directly with one or more of the remote units 105 via communication signals. Generally, the base units 110 transmit DL communication signals to serve the remote units 105 in the time, frequency, and/or spatial domain. Furthermore, the DL communication signals may be carried over the wireless communication links 115. The wireless communication links 115 may be any suitable carrier in licensed or unlicensed radio spectrum. The wireless communication links 115 facilitate communication between one or more of the remote units 105 and/or one or more of the base units 110.

In one embodiment, the mobile core network 140 is a 5G core ("5GC") or the evolved packet core ("EPC"), which may be coupled to a packet data network 150, like the Internet and private data networks, among other data networks. A remote unit 105 may have a subscription or other account with the mobile core network 140. Each mobile core network 140 belongs to a single public land mobile network ("PLMN"). The present disclosure is not intended to be limited to the implementation of any particular wireless communication system architecture or protocol.

The mobile core network 140 includes several network functions ("NFs"). As depicted, the mobile core network 140 includes multiple user plane functions ("UPFs") 141. The mobile core network 140 also includes multiple control plane functions including, but not limited to, an Access and Mobility Management Function ("AMF") 143 that serves the RAN 120, a Session Management Function ("SMF") 145, a Policy Control Function ("PCF") 147, and a Unified Data Management function ("UDM") 149. In certain embodiments, the mobile core network 140 may also include an Authentication Server Function ("AUSF"), a Network Repository Function ("NRF") (used by the various NFs to discover and communicate with each other over APIs), or other NFs defined for the 5GC.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. A network instance may be identified by a S-NSSAI, while a set of network slices for which the remote unit 105 is authorized to use is identified by NSSAI. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed.

Although specific numbers and types of network functions are depicted in Figure 1, one of skill in the art will recognize that any number and type of network functions may be included in the mobile core network 140. Moreover, where the mobile core network 140 is an EPC, the depicted network functions may be replaced with appropriate EPC entities, such as an MME, S-GW, P-GW, HSS, and the like. In certain embodiments, the mobile core network 140 may include a AAA server.

While Figure 1 depicts components of a 5G RAN and a 5G core network, the described embodiments for sidelink HARQ operation in NR V2X communication apply to other types of communication networks and RATs, including IEEE 802.11 variants, GSM, GPRS, UMTS, LTE variants, CDMA 2000, Bluetooth, ZigBee, Sigfoxx, and the like. For example, in an LTE variant involving an EPC, the AMF 143 may be mapped to an MME, the SMF mapped to a control plane portion of a PGW and/or to an MME, the UPF map to an SGW and a user plane portion of the PGW, the UDM/UDR maps to an HSS, etc.

In various embodiments, the remote units 105 may communicate directly with each other (e.g., device-to-device communication) using V2X communication signals 125. Here, V2X transmissions may occur on V2X resources. As discussed above, a remote unit 105 may be provided with different V2X communication resources for different V2X modes. Mode-1 corresponds to a NR network-scheduled V2X communication mode. Mode-2 corresponds to a NR UE-scheduled V2X communication mode. Mode-3 corresponds to an LTE network-scheduled V2X communication mode. Mode-4 corresponds to an LTE UE-scheduled V2X communication mode.

The remote unit 105 includes a VAE client 109 at a V2X middleware layer (i.e., an application-enabling function), which is configured to control the way that the V2X/eV2X message transmission/reception is configured for one or multiple V2X applications 107, taking into account the application requirements (service coverage, required min/max range, KPIs, application to service mapping, applications re-using the same V2X message, candidate relay UEs), traffic/radio conditions and the vehicle location information. The VAE client 109 interacts with a VAE server 153.

The VAE layer, by providing some initial support functionalities for V2X use cases, is a V2X application enabler layer for efficient use and deployment of V2X services over 3GPP systems. This V2X application enabler (VAE) layer comprises a VAE server 153 which may be either a PLMN-owned or a 3^{rd} party/vertical server, and one or more VAE clients 107 at the vehicle (i.e., remote unit 105) side. The VAE server 153 is a middleware platform that provides support functionalities to the enabler clients; and interacts with the application specific servers (e.g., platooning server) as well as with the involved PLMNs, to ensure meeting the per vertical requirements.

There, the server- and client-side V2X application layer support functions are defined:
The VAE server provides the server-side V2X application layer support functions, including communicating with the underlying 3GPP network system (EPS) for unicast and multicast network resource management, receiving monitoring reports/events from the underlying 3GPP network system (5GS and/or EPS) regarding network situation corresponding to RAN and core network, supporting registration of V2X UEs, tracking the application level geographic location of the V2X UEs, supporting V2X message distribution for the V2X applications, supporting provisioning of 3GPP system configuration information (e.g., V2X USD, PC5 parameters), perform the role of content provider for multicast file transfer using xMB APIs, providing network monitoring reports to the V2X UEs, communicating V2X service requirements to the underlying 3GPP network system (5GS and/or EPS), maintaining the mapping between the V2X user ID and the V2X UE ID, providing V2X service discovery, supporting V2X service continuity, and supporting V2X application resource adaptation.

The VAE client provides the client-side V2X application layer support functions, including registration of VAE clients for receiving V2X messages, receiving V2X messages from the VAE server and the delivery to V2X application specific client(s) according to the V2X service ID, perform the role of the MBMS client for multicast file transfer using xMB APIs, receiving network monitoring reports from the VAE server, supports switching the modes of operations for V2V communications (e.g., between direct and indirect V2V communications), providing application-level locations to the VAE server (e.g., tile, geo-fence), receiving 3GPP system configuration information (e.g., V2X USD, PC5 parameters) from the VAE server, supporting dynamic group management, and supporting interactions with the V2X application specific client(s).

In the following descriptions, the term eNB/ gNB is used for the base station but it is replaceable by any other radio access node, e.g., BS, eNB, gNB, AP, NR, etc. Further the operations are described mainly in the context of 5G NR. However, the proposed solutions/methods are also equally applicable to other mobile communication systems supporting serving cells/carriers being configured for Sidelink Communication over PC5 interface.

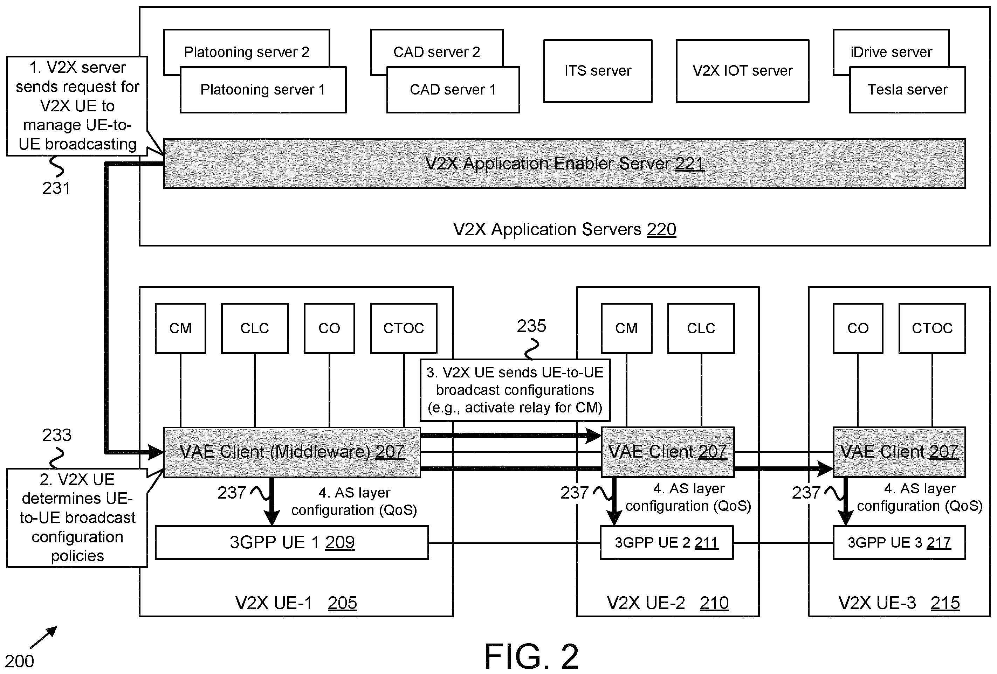

Figure 2 depicts a network architecture 200 for V2X message distribution control, according embodiments of the disclosure. Note that the PC5 reference point may be referred to herein as the "PC5 interface." The network architecture 200 includes a first V2X UE ("V2X UE-1") 205, a second UE ("V2X UE-2") 210 and a third UE ("V2X UE-3") 215 that communicate over the PC5 reference point. Here, it is assumed that the V2X-UEs are connected to a 5G system ("5GS") and at least the first V2X UE 205 is in communication with a set of V2X application servers 220. Each V2X UE is one embodiment of the remote unit 105 described above. Each V2X UE includes an application layer with one or more V2X Applications, a V2X layer (i.e., a middleware layer) with a VAE client 207 and a 3GPP UE (i.e., having a cellular modem functionality).

Included among the set of V2X application servers 220 are platooning servers (e.g., first and second platooning servers are illustrated), cooperative automated driving ("CAD") servers (e.g., first and second CAD servers are illustrated), Intelligent Transportation System ("ITS") servers, V2X Internet-of-Things ("IoT") servers, and vendor-specific V2X servers (here, the 'iDrive' server and the 'Tesla' server are shown). These may be embodiments of the V2X application server 151. The set of V2X application servers 220 also includes a V2X Application Enabler ("VAE") server 221, a middleware platform which interfaces with the VAE client middleware 207 on the V2X UEs (i.e., located in the V2X layer). The VAE server 221 is one embodiment of the VAE server 153. Note that the VAE server 221 and VAE clients 207 form a distributed V2X middleware.

Disclosed herein is a mechanism for configuring and transmitting groupcast / broadcast V2X / eV2X application messages (e.g., CPM, PCM, MCM, DENM) to ensure meeting the communication service requirements; while at the same time avoiding the V2X message broadcast flood. This mechanism is applicable to single hop V2V transmissions, as well as for scenarios when the communication among vehicles requires to be relayed via intermediate vehicles.

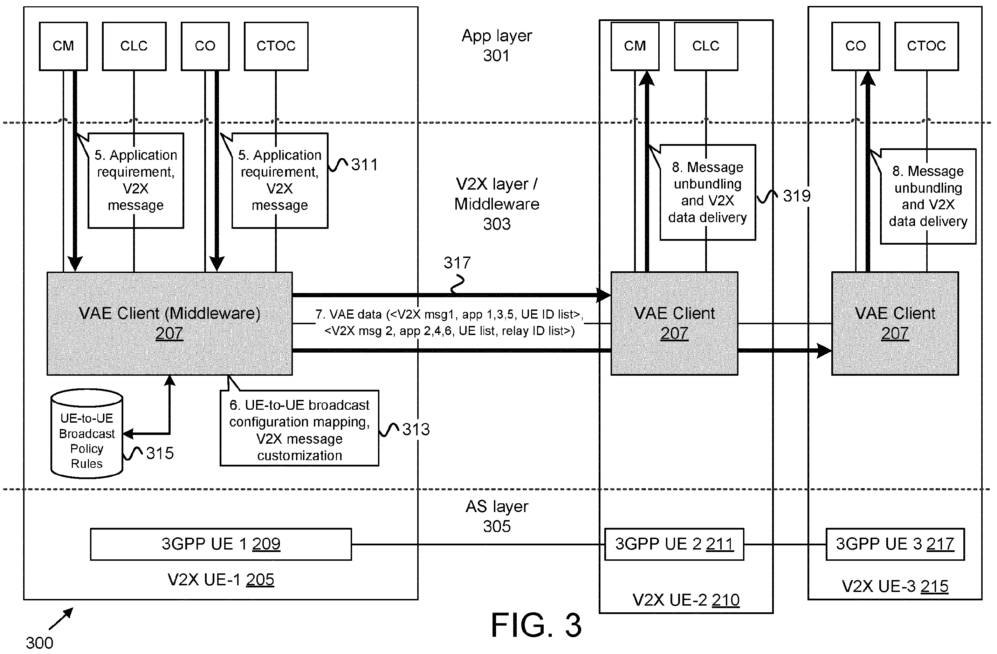

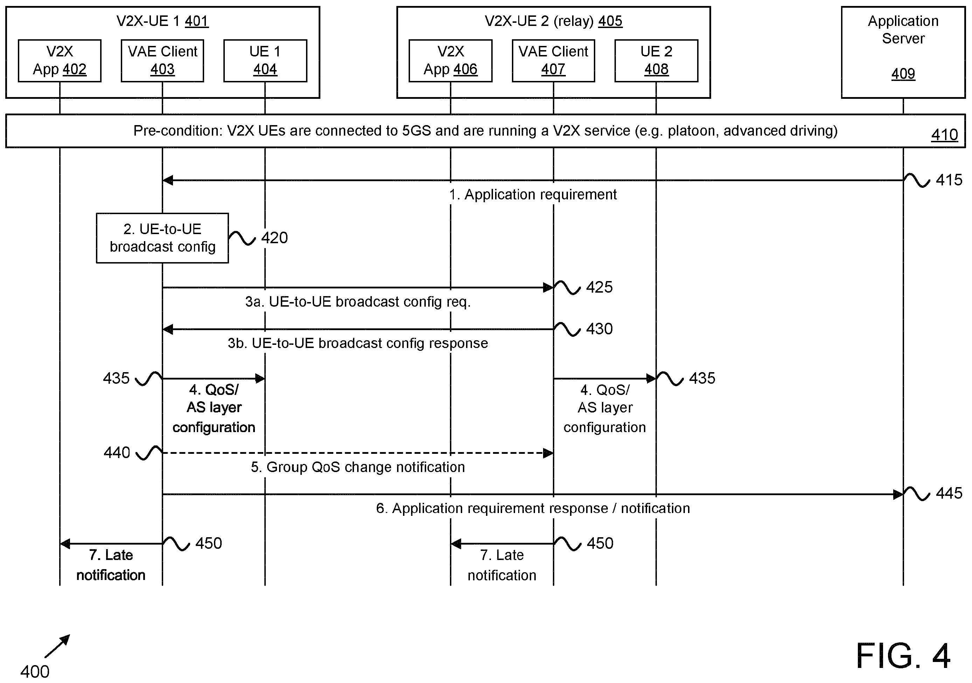

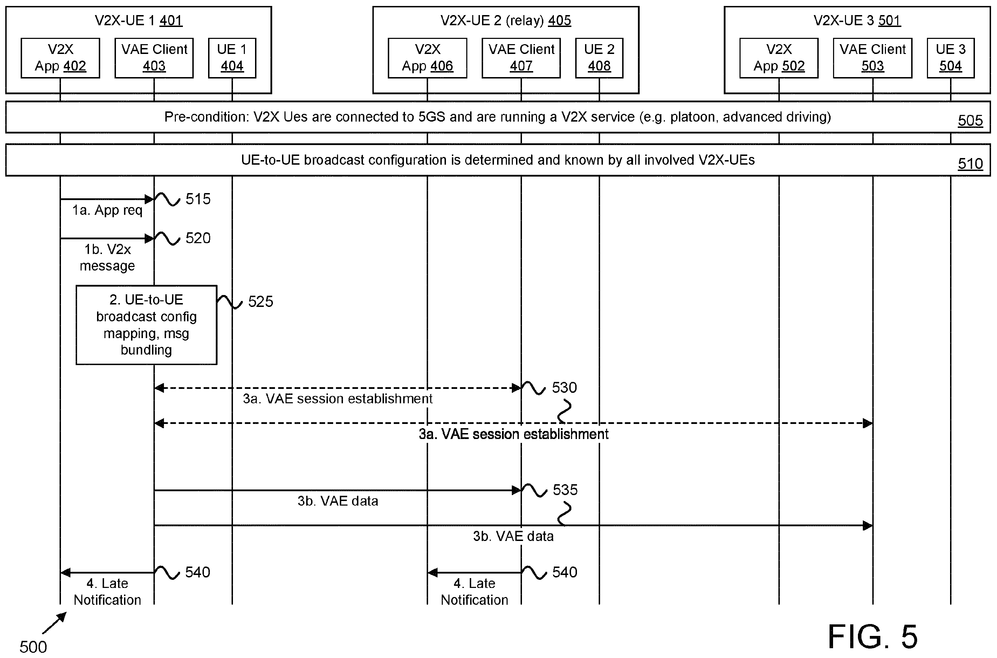

The mechanism provides both a configuration phase, shown in Figure 2 and Figure 4, and an operation phase shown in Figure 3 and Figure 5.

Referring to Figure 2, at Step 1 a VAE client 207 at the first V2X UE 205 receives a request from a V2X server to manage the UE-to-UE broadcasting of one or more V2X applications in given V2X service area (see block 231). This request includes parameters on the applications, the application to V2X message mapping, application to service mapping, the UE identities, the coverage area, time validity, configuration of applications/services, V2V service KPIs, UE-to-UE relay requirement for some applications, candidate relays and their access capabilities.

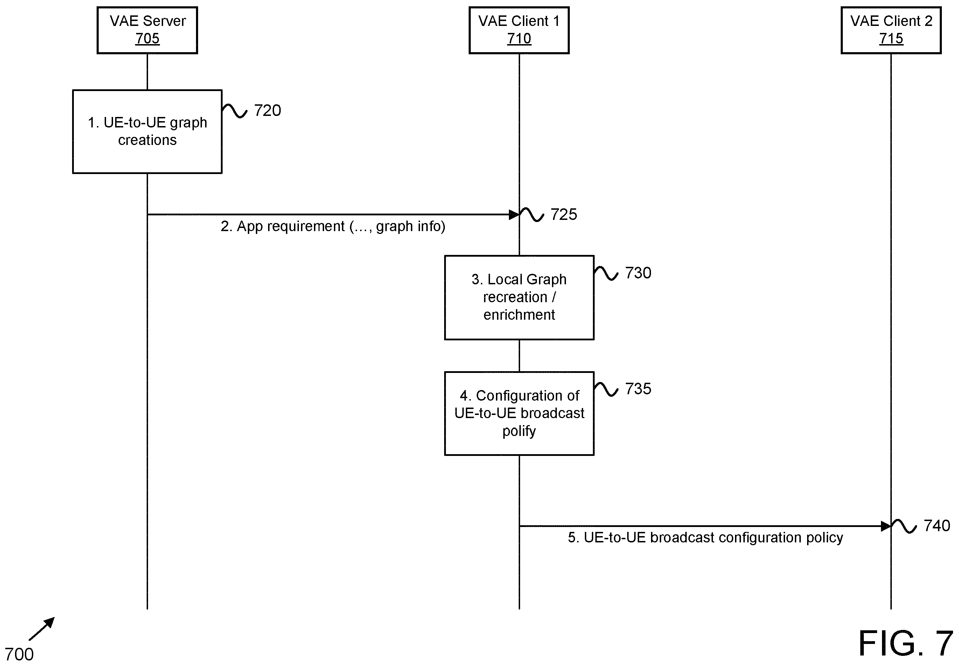

At Step 2, the VAE client 207 (i.e., middleware) at the first V2X UE 205 determines and stores a configuration policy for the UE-to-UE communications (see block 233). This determination considers the relative location (e.g., using CAM messages) of the vehicles, road map/ traffic situation, communication requirement / KPIs, provisioning policies for PC5, number and location of UE relays, bandwidth demand per application. The actual algorithm for determining this may depend on implementation. For example, a graph-based configuration may be used as discussed in further detail with refer to Figures 7-9.

The determined configuration policy can be one or combination of the following policies which can be used for the UE-to-UE broadcast: 1) Select whether to activate or to temporarily deactivate the relaying capability for one or more applications; 2) Trigger the adaptation of the QoS attributes of the PC5 session, e.g., reduce the communication range, if relays are used, to avoid broadcast flooding; 3) Trigger the adaptation of the number of re-transmissions of the application messages; and 4) Activate the bundling of V2X messages to containers. This will enable one-time delivery to the target V2X-UEs in high load scenarios.

At Step 3, the VAE client 207 at the first V2X UE 205 sends one or more V2X configuration policies for the V2X message per application or per group of applications, to the other VAE clients 207 at the involved V2X UEs 210, 215 (see messaging 235). In one embodiment, the first V2X UE sends the V2X configuration policies directly to the other V2x UEs 210, 215. In another embodiment, the V2X UEs 210, 215 receive the V2X configuration policies indirectly, i.e., via one or more application servers.

At Step 4, the middleware at the V2X UEs pass this configuration to lower layers / AS layer, which can be the PC5 QoS adaptation or more generally the groupcast control (see messaging 237). Here, the VAE client 207 at the target UEs is acting as the V2X layer for QoS and groupcast control.

Figure 3 depicts a network architecture 300 for V2X message distribution control, according embodiments of the disclosure. The network architecture 300 includes the first V2X UE 205, the second UE 210 and the third UE 215. Figure 3 shows an operation phase of the V2X message distribution control mechanism introduced in Figure 2. Note that the operation phase represents a run-time operation performed after V2X UE configuration. The run-time operation includes message delivery to one or more V2X UEs.

At Step 5, a V2X application (i.e., Cooperative Merging ("CM") application and/or Cooperative Overtaking ("CO") application) running at the application layer 301 on the first V2X UE 205 wants to send a V2X message and provides a requirement to the VAE client 207 at the V2X / middleware layer 303 at the first V2X UE 205 (either together with the CM/CO message or as separate message) (see block 311). An example message may be an accident event or a desired trajectory of the vehicle for cooperative lane merging.

At Step 6, the middleware at the first V2X UE 205 (here the VAE client 207) performs the mapping of the V2X message and the application which requires this transmission, and determines based on the configuration policies, what should be the customization of the message before sending to other V2X UEs (see block 313). This customization may be the message format, number of retransmissions, whether acknowledgement is required or not, whether the V2X message should be bundled to a container or not. Note that the V2X layer / middleware 303 stores a set of UE-to-UE broadcast policy rules 315. These rules correspond to the stored configuration policy for the UE-to-UE communications determined in Step 2 and distributed in Step 3.

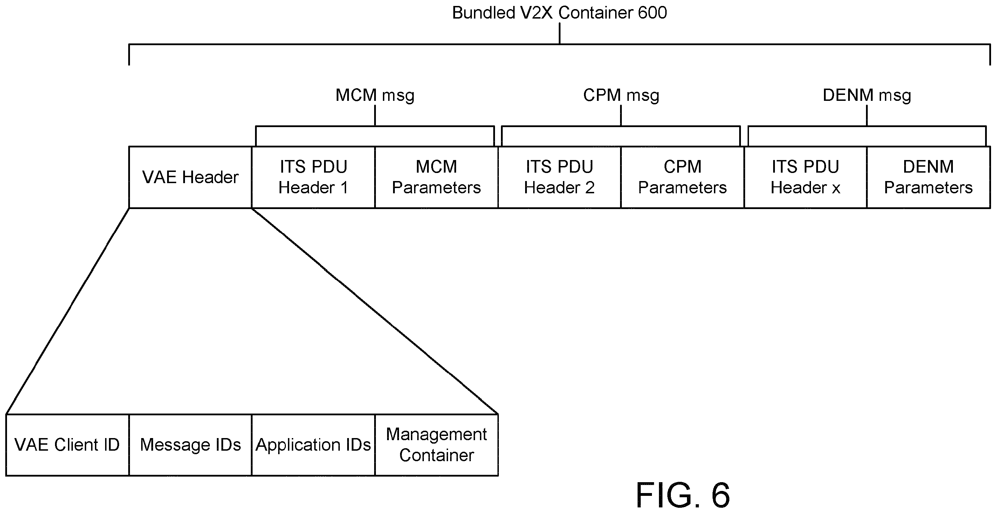

At Step 7, the middleware at the first V2X UE (VAE client 301) sends one or more V2X message to all other V2X UEs using the determined configuration policies and the processing in Step 6 (including which application requires this message) (see messaging 317). In this step, a grouping of V2X messages which are needed to be sent to the V2X UEs in the area may be decided, to avoid sending for multiple applications the same message or to avoid sending different messages to the same V2X UEs with separate transmissions. The bundling of V2X messages may also consider some restrictions for sharing application data among applications and may need to be encrypted. An example bundled message is described below with reference to Figure 6.

At Step 8, the VAE clients 207 unbundle the VAE data and deliver the V2X message to the appropriate V2X application (e.g., CM V2X application at the second V2X-UE 210 and CO V2X application at the third V2X-UE 215) at the application layer 301 (see block 319).

Figure 4 depicts a procedure 400 for a configuration phase of V2X message distribution control, according to embodiments of the disclosure. The procedure 400 involves a first V2X-UE 401, a second (relay) V2X-UE 405, and an application server 409 and provides the flow of messages which need to be exchanged between V2X UEs 401, 405 and the application server 409 (i.e., VAE/V2X server). The first V2X-UE 401 includes at least one V2X application 402, a VAE middleware client 403, and first 3GPP UE functionality 404. Similarly, the second V2X-UE 405 includes at least one V2X application 406, a VAE middleware client 407, and second 3GPP UE functionality 408. In the depicted embodiment, the middleware is distributed among a server and a client (aka VAE server and VAE client respectively). The functionality resides at the VAE client but will be configured by the VAE server or a V2X server, or more generally a V2X application.

At Step 0, as a precondition, all the involved UEs are to be connected to 5GS. Also note that it is assumed that one or more V2X services are authorized and running (see block 410).

At Step 1, the application server 405 (which can be the V2X AS 151, the VAE server 153, and/or the VAE server 221) provides an application requirement to the V2X UEs (or to one of the V2X UEs which acts as ego / leading / head vehicle for the V2X service). In the depicted embodiment, the application server sends the application requirement to the first V2X-UE 401 (see messaging 415). In certain embodiments, the application requirement message is in the form of a request from a VAE server 221 to determine a configuration policy. In certain embodiments, the application requirement message is in the form of a notification message from a VAE server 221. This application requirement message includes at least one of the following parameters:
Application ID, Transaction ID, Application group ID
V2X UE ID (GPSI, external ID, PEI/IMEI)
Group ID
List of supported Message IDs
Application-to-V2X message mapping information
Application-to-service mapping information,
V2X Service Area
Policy provisioning for applications/services,
V2V session KPIs,
UE-to-UE relay requirement for some applications,
Candidate relay IDs per application or group of applications; and optionally their access capabilities.
Time Validity for the requirement

At Step 2, the VAE client 301 determines and stores a configuration policy for the UE-to-UE communications (see block 420). This determination considers the relative location (e.g., CAM messages) of the vehicles, road map/ traffic situation, communication requirement / KPIs, provisioning policies for PC5, number and location of UE relays, bandwidth demand per application.

The conditions for selecting a policy are: 1) ensuring V2X message reachability to all the affected UEs (as requested by V2X/VAE server in step 1; 2) avoid V2X message flooding, by limiting the transmissions only to the necessary recipient UEs.

The determined configuration policy can be one or combination of the following policies which can be used for the UE-to-UE broadcast based on the following conditions: A) Select whether to activate or to temporarily deactivate the relaying capability for one or more applications; B) Trigger the adaptation of the QoS attributes of the PC5 session, e.g., reduce the communication range, if relays are used, to avoid flooding; C) Trigger the adaptation of the number of re-transmissions of the application messages; and D) Activate the bundling of V2X messages to containers. This will enable one-time delivery to the target V2X-UEs in high load scenarios.

At Step 3a: The VAE client 301 communicates one or more configuration policy for the UE-to-UE communications, to one or more VAE clients of one or more further V2X-UEs (see messaging 425). A UE-to-UE broadcast config request message includes at least one of the following parameters:
VAE client ID, Application ID
Transaction ID
V2X UE ID (GPSI, external ID)
Group ID
Message ID
Relay ID
Configuration policy ID (if the different policies have pre-defined identifiers)
Configuration policy parameters
Activate, modify, deactivate relay
Current and newly requested QoS policies
Current and newly requested number of allowed re-transmissions
Activate or deactivate message bundling mode
Configuration parameters for bundling mode

At Step 3b, the VAE client which received the message in previous step, send back a UE-to-UE broadcast config response message which includes either a positive or a negative acknowledgement of the message (see messaging 430). This message may also include parameters for negotiating the configuration policies among the UEs (in this case, new Configuration policy parameters may be sent back to the originating V2X-UE).

At Step 4, the VAE client at the V2X UEs pass this configuration to 3GPP UEs 404, 408 (i.e., to lower layers / AS layer 305), which can be the PC5 QoS adaptation or more generally the groupcast control (middleware at the target UEs, is acting as the V2X layer for QoS and groupcast control as in 23.287).

At Step 5, optionally, the VAE client 403 notifies (or requests) to the other VAE client(s) 407the adaptation of QoS to one or more involved UEs, which can be a new QoS mapping for the affected V2X sessions(s) (see messaging 440).

At Step 6, the VAE client 403 may send an application requirement response to the application server 409 (i.e., VAE/V2X server) to confirm whether the request in Step 1 was successfully handled (see messaging 445). This can be an ACK/NACK or a notification of the new policies (e.g., deactivation of a relay).

At Step 7, the VAE client of the affected UEs after the successful adaptation, may send a Late Notification message to their respective applications about the new policy setting for the V2X message transmission/reception (see messaging 450).

Figure 5 depicts a procedure 500 for an operation phase of V2X message distribution control, according to embodiments of the disclosure. The procedure 500 involves a first V2X-UE 401, a second (relay) V2X-UE 405, and a third V2X-UE 501 and provides the flow of messages which need to be exchanged between V2X UEs for the message delivery. In the depicted embodiment, the middleware is distributed among a server and a client (aka VAE server and VAE client respectively). The functionality resides at the VAE client but will be configured by the VAE server or a V2X server, or more generally a V2X application. Note that the third V2X-UE 501 includes at least one V2X application 502, a VAE middleware client 503, and first 3GPP UE functionality 504.

At Step 0a, as a first precondition, all the involved UEs are to be connected to 5GS. Also note that it is assumed that one or more V2X services are authorized and running (see block 505).

At Step 0b, as a second precondition, a UE-to-UE broadcast configuration (discussed in the previous phase) is configured/stored at the V2X UEs and provides the procedure for the run-time phase, e.g., when the V2X message needs to be transmitted to one or more other V2X applications (see block 510).

At Step 1, the V2X application 402 of the first V2X-UE 401 sends an app requirement for V2X message transmission (step 1a, see messaging 515) and/or the V2X message (step 1b, see messaging 520) that it wants to transmit, to the VAE client 403. Here it is assumed that VAE client 403 has the authorization to receive and process the V2X message. This message may be a PCM, CPM, MCM, DENM or any other V2X/eV2X message.

At Step 2, the VAE client 403 performs the mapping of the V2X message and the V2x application 402 which requires this transmission, and determines based on the configuration policies, what should be the customization of the message before sending to other UEs (see block 525). This customization may be the message format, number of retransmissions, whether acknowledgement is required or not, whether the V2X message should be bundled to a container or not.

At Step 3a, optionally, a VAE session is established between VAE clients for the V2X message delivery among VAE clients (see messaging 530). For the case, when a receiving V2X-UE 405 serves as Relay (i.e., UE-to-UE relay between the first V2X-UE 401 and the third V2X-UE 501), the VAE session establishment message includes the identifier for the destination VAE client 503 and parameters for supporting the relaying to the destination V2X-UE 501.

At Step 3b, VAE data are sent among VAE clients 403, 407, 503, as configured previously (see messaging 535). In this step, a grouping of V2X messages which are needed to be sent to the V2X UEs in the area may be decided, to avoid sending for multiple applications the same message or to avoid sending different messages to the same V2X UEs with separate transmissions.

At Step 4, the VAE client of the affected UEs after the successful adaptation, may send a Late Notification message to their respective applications about the successful V2X message transmission/reception (see messaging 540).

Figure 6 depicts one example of a bundled message format for the VAE data, which includes CPM, MCM, and DEMN messages, according to the embodiments discussed above. The bundled V2X container 600 includes a VAE header with a VAE client ID, message IDs, Application IDs, and a management container. The bundled V2X container 600 includes an MCM message containing a first ITS PDU header and MCM parameters. The bundled V2X container 600 includes a CPM message containing a second ITS PDU header and CPM parameters. The bundled V2X container 600 includes a DEMN message containing a third ITS PDU header and DEMN parameters.

Figure 7 depicts a procedure 700 for enhanced V2X broadcast configuration using UE-to-UE virtual user graphs, according to embodiment of the disclosure. The procedure 700 involves a VAE server 705, a first VAE client 710, and a second VAE client 715. The VAE server 705 may be one embodiment of the VAE server 153 and/or VAE server 221, discussed above. The first and second VAE clients 710, 715 may be embodiments of the VAE client 109 and/or the VAE client 301, discussed above. The procedure 700 may be used to supplement and/or extend the procedure 400, discussed above.

At step 1, the VAE server 705 creates virtual user-graphs representing where the service area and the active V2X UEs within this area are matched (see block 720). First, the VAE server 705 generates a virtual user-graph G. The virtual user-graph G represents where the service area and the active V2X UEs within this area are matched without UE-to-UE application relay (i.e., with relays disabled). More specifically, each node represents a user which runs a V2X application, and its position can be its position (e.g., geographical coordinates). Based on the communication range, each V2X UE has a radius which is translated to edges with connecting V2X UEs.

In various embodiments, the virtual user-graph G may have some node with overlapping edges; this means that the V2X UE runs more than one applications at the same time (e.g., platooning and sensor sharing) or that this V2X UE is in coverage of another application using the same radio and it may receive unwanted signals from other vehicles.

In some embodiments, the edges may be weighted (the higher weight the more potential the impact of broadcast flood). Here, the weight may be a function of the relative location between nodes and the demand requirement for the application messages to be exchanges (i.e., payload, periodicity, minimum range, etc.). Optionally, the weight may also be a function of the transportation environment (i.e., urban, suburban, rural) and/or traffic conditions.

Second, the VAE server 705 generates a virtual user-graph G' which considers the use of relays to ensure extended coverage. The virtual user-graph G' represents where the service area and the active V2X UEs within this area are extended with the use of UE-to-UE application relay (i.e., with relays enabled). Note that the virtual user-graph G' is expected to have a higher level of service area overlap due to UE-to-UE application relay.

The virtual user-graph G' also may have some node with overlapping edges; this means that the V2X UE runs more than one applications at the same time (e.g., platooning and sensor sharing) or that this V2X UE is in coverage of another application using the same radio and it may receive unwanted signals from other vehicles.

Again, the edges may be weighted (the higher weight the more potential the impact of broadcast flood). Here, the weight may be a function of the relative location between nodes and the demand requirement for the application messages to be exchanges (i.e., payload, periodicity, minimum range, etc.). Optionally, the weight may also be a function of the transportation environment (i.e., urban, suburban, rural) and/or traffic conditions.

Third, the VAE server 705 sets various threshold for V2X UE operation based on the virtual user-graphs G and G'. Here, the VAE server 705 sets thresholds per application for the minimum and maximum weight of the graph. Additionally, the VAE server 705 may calculate the weighted threshold degree of each node can be calculated as the maximum sum of all weights of all edges reaching a Node (incoming, outgoing). This is an initial degree which can be updated at the VAE client side.

At Step 2, the VAE server 705 sends this graph information to the first VAE client 710 (see messaging 725). In certain embodiments, the VAE server 705 sends the graph information within an application requirement message (see Step 1 of Figure 2, Figure 4).

In various embodiments, the graph information includes virtual graph G without relays, virtual graph G' using relaying, thresholds, and weighted threshold degree per node, as discussed above. In certain embodiments, the graph information is sent in form of a table (column UE x, row UE y, weight between UE x and y). In certain embodiments, the graph information is sent in form of a list of <UE x, UE y, weight x,y>. In other embodiments, the graph information is sent another form.

At Step 3, the first VAE client 710 (re)creates a local virtual user-graph G" based on its knowledge, e.g., based on the received CAM messages (see block 730). And after receiving of graphs from VAE server the local graph G" is enriched with updated edges and nodes from VAE server.

At Step 4, the VAE client 710 performs the decision making on what policy to use based on the following strategies to minimize broadcast flood (condition 2) while ensuring proper service coverage (condition 1) (see block 735).

According to a first strategy ("S1"), the VAE client selects whether to activate or not the relaying capability (use at local graph new weights / re-calculate so as to check whether condition 1 is met).

According to a second strategy ("S2") "), the VAE client 710 hypothetically reduces range / change QoS attributes by a pre-determined step function if condition 2 is not met, and check whether condition 1 is met.

According to a third strategy ("S3"), the VAE client 710 hypothetically reduces the number of re-transmissions if condition 2 is not met, and check whether condition 1 is met.

According to a fourth strategy ("S4"), the VAE client 710 finds the users with highest degree. From these users or to these users bundle V2X messages to containers. This happens if condition 2 is not met for some links, and check whether condition 1 is met.

At Step 5, the first VAE client 710 sends the UE-to-UE broadcast configuration policy to the second VAE client 715 (see messaging 740).

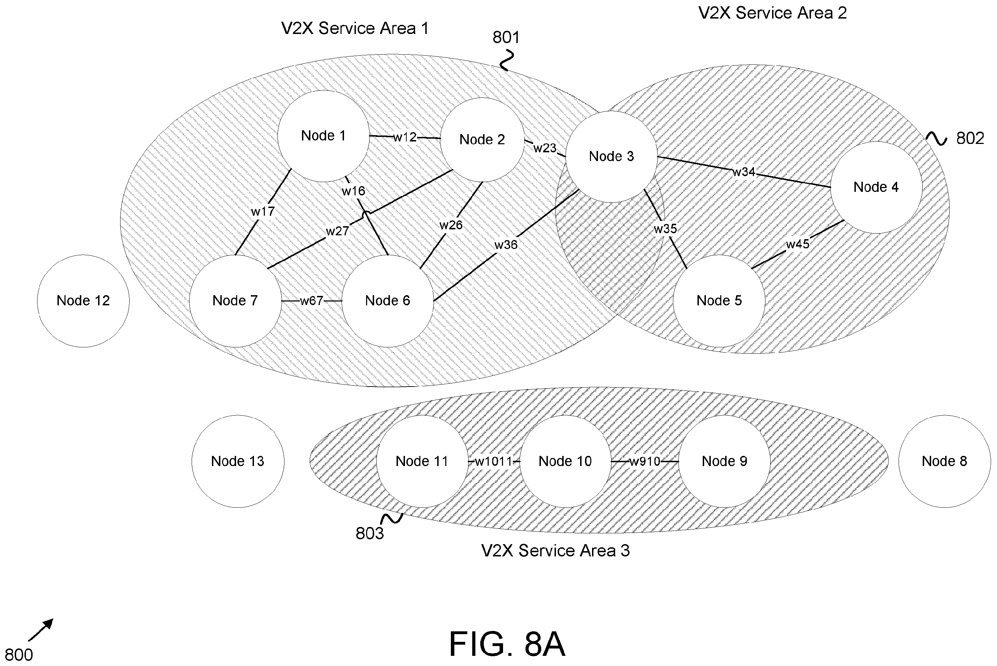

Figure 8A depicts a virtual user graph 800 of broadcast service coverage where UE-to-UE application relay is disabled. The virtual user graph 800 is one example of the virtual user-graph G which maps V2X service areas for a set of 13 V2X UEs. Here, a first V2X service area 801 includes nodes 1, 2, 3, 6, and 7. A second V2X service area 802 includes nodes 3, 4, and 5. Note that the first V2X service area 801 and the second V2X service area 802 have overlapping edges and the node 3 is part of both service areas. A third V2X service area 803 includes nodes 9, 10, and 11. However, the nodes 8, 12, and 13 are outside any V2X service area without UE-to-UE application relay.

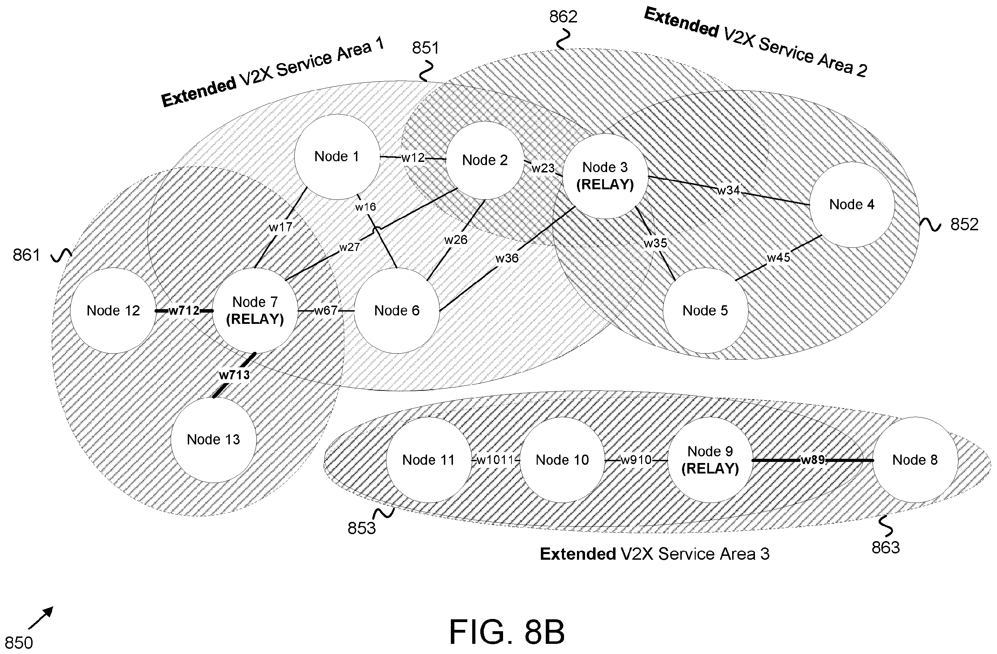

Figure 8B depicts a virtual user graph 850 of broadcast service coverage where UE-to-UE application relay is enabled. The virtual user graph 850 is one example of the virtual user-graph G' which maps V2X service areas for a set of 13 V2X UEs. Here, a first extended V2X service area 1 841 includes nodes 1, 2, 3, 6, 7, 12 and 13. A second extended V2X service area 2 842 includes nodes 2, 3, 4, and 5. Note that the first extended V2X service area 851 and the second extended V2X service area 852 have overlapping edges and nodes 2 and 3 are part of both service areas. A third extended V2X service area 853 includes nodes 8, 9, 10, and 11. In the depicted example, nodes 3, 7 and 9 are relays, thereby extending the service areas of the second, first and third service areas, respectively. Thus, activating UE-to-UE relay for node 7 causes the extension 861 to the first extended V2X service area 851. Activating UE-to-UE relay for node 3 causes the extension 862 to the second extended V2X service area 852. Activating UE-to-UE relay for node 7 causes the extension 863 to the third extended V2X service area 853. As discussed above, the virtual user graphs 800, 850 may be used by a VAE client to determine which strategy to apply from a variety of UE-to-UE broadcast strategies, as described herein.

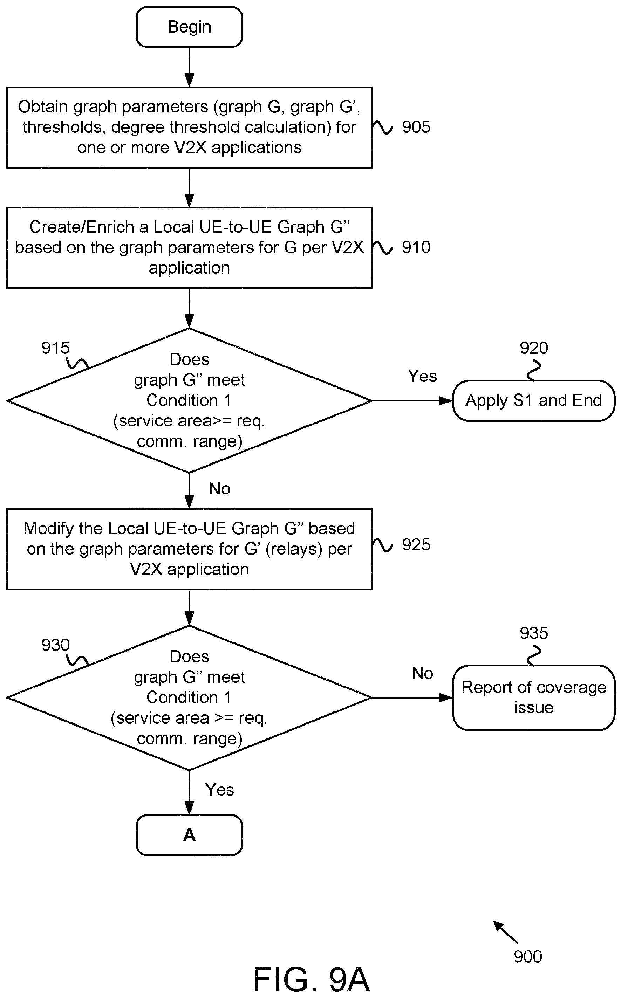

Figures 9A-9B depict a flowchart of a procedure 900 for selecting a policy strategy, according to embodiments of the disclosure. The procedure 900 may be performed by a VAE client, such as the VAE client 710. The procedure 900 begins as the VAE client obtains 905 graph parameters from a VAE server. The graph parameters may include a virtual user-graph G', a virtual user-graph G', threshold, and weighted threshold degree calculations.

Next, the VAE client creates and/or enriches (updates) 910 a local UE-to-UE graph G" based on the graph parameters for user-graph G (i.e., having relays disabled), per V2X application. The VAE client determines 915 whether the graph G" meets Condition 1. If the graph G" meets Condition 1 (i.e., service area is greater than or equal to a required communication range), then the VAE client applies 920 Strategy 1, discussed above, and the procedure 900 ends.

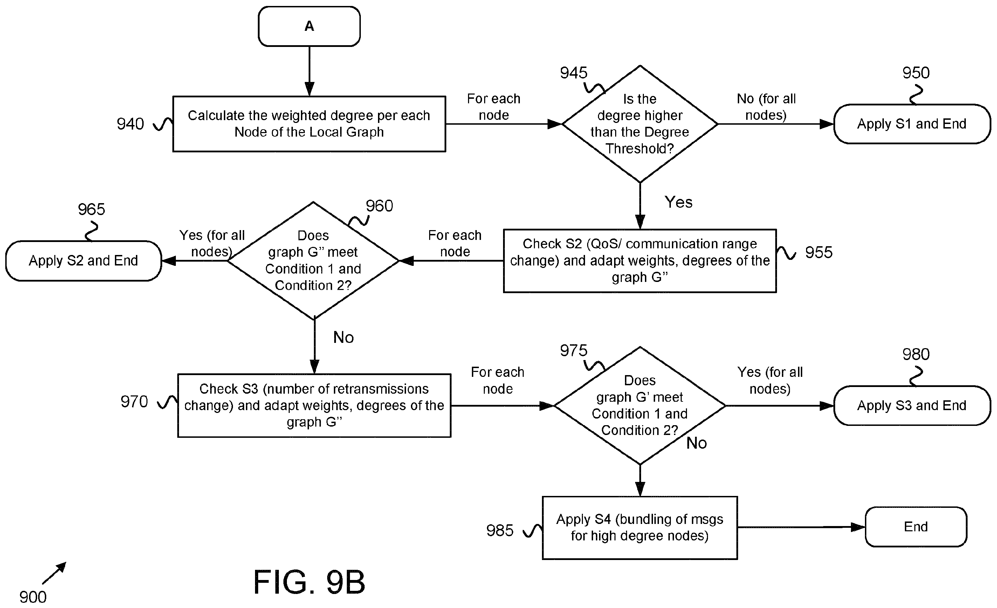

Otherwise, if the graph G" does not meet Condition 1, then the VAE client modifies 925 the local UE-to-UE graph G" based on the graph parameters for user-graph G' (i.e., having relays enabled), per V2X application. The VAE client determines 930 whether the modified graph G" meets Condition 1. If the modified local graph G" meets Condition 1, then the VAE client goes to Step A on Figure 9B. However, if the modified local graph G" still does not meet Condition 1, then the VAE client reports 935 a coverage issue.

Continuing as Step A on Figure 9B, the VAE client calculates 940 the weighted degree per each node of the local graph G". For each node, the VAE client determines 945 whether the weighted degree is higher than the degree threshold. If the weighted degree is not higher than the degree threshold for all nodes, then the VAE client applies 950 Strategy 1, discussed above, and the procedure 900 ends. Otherwise, if the weighted degree is less than (or equal to) the degree threshold, then the VAE client hypothetically reduces 955 range / change QoS attributes (according to Strategy 2, discussed above) and adapts the weights and weighted degrees of the graph G".

The VAE client determines 960 whether the adapted graph G" meets both Condition 1 and Condition 2. If both conditions are met for all nodes, then the VAE client applies 965 Strategy 2, discussed above, and the procedure 900 ends. Otherwise, the VAE client hypothetically reduces 970 the number of re-transmissions and revises the weights and weighted degrees of the graph G".

The VAE client determines 975 whether the revised graph G" meets both Condition 1 and Condition 2. If both conditions are met for all nodes, then the VAE client applies 980 Strategy 3, discussed above, and the procedure 900 ends. Otherwise, the VAE client bundles 985 V2X messages for nodes with high weighted degree, according to Strategy 4 discussed above, and the procedure 900 ends.

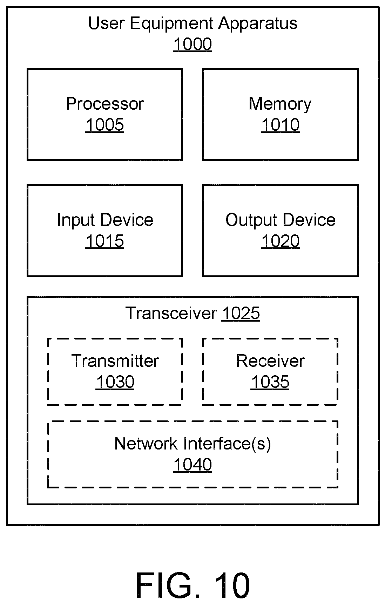

Figure 10 depicts a user equipment apparatus 1000 that may be used for controlling V2X message distribution, according to embodiments of the disclosure. In various embodiments, the user equipment apparatus 1000 is used to implement one or more of the solutions described above. The user equipment apparatus 1000 may be one embodiment of a V2X UE, such as the remote unit 105, the V2X UE-1 205, the V2X UE-2 210, the V2X UE-3 215, the first V2X-UE 501, the second V2X-UE 503, the first V2X-UE 601, and/or the VAE client 710, described above. Furthermore, the user equipment apparatus 1000 may include a processor 1005, a memory 1010, an input device 1015, an output device 1020, and a transceiver 1025. In some embodiments, the input device 1015 and the output device 1020 are combined into a single device, such as a touchscreen. In certain embodiments, the user equipment apparatus 1000 may not include any input device 1015 and/or output device 1020. In various embodiments, the user equipment apparatus 1000 may include one or more of: the processor 1005, the memory 1010, and the transceiver 1025, and may not include the input device 1015 and/or the output device 1020.

The processor 1005, in one embodiment, may include any known controller capable of executing computer-readable instructions and/or capable of performing logical operations. For example, the processor 1005 may be a microcontroller, a microprocessor, a central processing unit ("CPU"), a graphics processing unit ("GPU"), an auxiliary processing unit, a FPGA, or similar programmable controller. In some embodiments, the processor 1005 executes instructions stored in the memory 1010 to perform the methods and routines described herein. The processor 1005 is communicatively coupled to the memory 1010, the input device 1015, the output device 1020, and the transceiver 1025.

In various embodiments, the processor 1005 controls the user equipment apparatus 1000 to implement the above described UE behaviors. For example, the processor 1005 may implement a VAE client middleware, such as the VAE client 207, VAE client 403, VAE client 407, VAE client 503 and/or VAE client 710, described above. During a configuration phase, the processor 1005 may receive (e.g., via transceiver 1025) at least one application requirement from one or more V2X applications. In some embodiments, the one or more V2X applications includes a V2X application server and/or a VAE server.

In various embodiments, the at least one application requirement comprises at least one of: an Application Identifier, an External group Identifier, a Transaction Identifier, a V2X UE Identifier, a list of supported message identifiers, a request/notification to determine a configuration policy; Application-to-V2X message mapping information, Application-to-service mapping information, V2X Service Area information, and policy provisioning for applications/services; UE-to-UE relay requirement per application, Candidate relay IDs per application or group of applications, per session Key Performance Indicators, and a Validity Time for the at least one application requirement.

The processor 1005 determines a configuration policy for a plurality of V2X UEs based on the at least one application requirement. Here, the configuration policy controls the V2X message distribution among the plurality of V2X UEs. In some embodiments, the configuration policy minimizes a broadcast flood condition among the plurality of V2X UEs. In various embodiments, the configuration policy comprises at least one of: a UE-to-UE broadcast policy and groupcast configuration policy.

In various embodiments, the configuration policy comprises at least one of: a VAE client ID, an Application ID, a Transaction ID, V2X UE ID, an External Group ID, at least one Message ID, at least one Relay ID, a Configuration policy ID, and at least one configuration policy parameter. In certain embodiments, the at least one configuration policy parameter comprises at least one of: an indication to activate UE-to-UE relaying, an indication to deactivate UE-to-UE relaying, a current QoS policy, a newly requested QoS policy, a current number of allowed V2X message re-transmissions, a newly requested number of allowed V2X message re-transmissions, an indication to activate a V2X message bundling mode, an indication to deactivate the V2X message bundling mode, and at least one configuration parameters for the V2X message bundling mode.

The processor 1005 controls the transceiver 1025 to transmit the determined configuration policy to at least one V2X UE of the plurality of V2X UEs. In some embodiments, the transceiver 1025 transmits a notification to the at least one V2X application as feedback corresponding to the at least one application requirement.

In various embodiments, the processor 1005 constructs a graph for at least one V2X application and determines the at least one configuration policy based on the processing of the constructed graph. In such embodiments, the graph includes: a plurality of graph vertices indicating a plurality of V2X UEs, a graph edge between each pair of vertices, and at least one weight corresponding to each pair of vertices.

In certain embodiments, the at least one weight corresponding to each pair of vertices is calculated based on one or more of: a relative location between nodes, a demand requirement for the V2X messages, an environment condition, and current traffic conditions. In further embodiments, the at least one application requirement includes at least one of: UE-to-UE graphs parameters, thresholds, and degree threshold.

During an operation phase, the processor 1005 may receive a V2X message from a V2X application of at least one V2X UE. The processor 1005 processes the V2X message based on a configuration policy for a plurality of V2X UEs, the at least one V2X UE selected from the plurality of V2X UEs, wherein the configuration policy controls the V2X message distribution among the plurality of V2X UEs. In some embodiments, the transceiver 1025 receives the configuration policy from one of the plurality of V2X UEs.

The processor 1005 controls the transceiver 1025 to transmit at least one V2X message to at least one V2X-UE of the plurality of V2X-UEs based on the configuration policy. In some embodiments, the transceiver 1025 transmits a notification to the V2X application of the at least one V2X UE as feedback corresponding to the at least one V2X message.

In some embodiments, the configuration policy is based on at least one application requirement of the V2X application. In such embodiments, the transceiver may transmit a notification to the V2X application of the at least one V2X UE as feedback corresponding to the at least one application requirement.

In some embodiments, transmitting the at least one V2X message comprises bundling a plurality of V2X messages according to the configuration policy.

In some embodiments, the processor 1005 relays at least one V2X message. In such embodiments, the configuration policy activates UE-to-UE relaying for at least one V2X application supported at the UE.

In various embodiments, the processor 1005 establishes a VAE session with a VAE client running on the at least one V2X UE, wherein transmitting the at least one V2X message comprises delivering the at least one V2X message via the VAE session. In such embodiments, a VAE session establishment message includes an identifier for a destination VAE client and at least one parameters for supporting message relay to a destination V2X-UE.

The memory 1010, in one embodiment, is a computer readable storage medium. In some embodiments, the memory 1010 includes volatile computer storage media. For example, the memory 1010 may include a RAM, including dynamic RAM ("DRAM"), synchronous dynamic RAM ("SDRAM"), and/or static RAM ("SRAM"). In some embodiments, the memory 1010 includes non-volatile computer storage media. For example, the memory 1010 may include a hard disk drive, a flash memory, or any other suitable non-volatile computer storage device. In some embodiments, the memory 1010 includes both volatile and non-volatile computer storage media.

In some embodiments, the memory 1010 stores data related to SL HARQ operation. For example, the memory 1010 may store V2X communication resources, V2X configuration policies, UE-to-UE graphs, and the like. In certain embodiments, the memory 1010 also stores program code and related data, such as an operating system or other controller algorithms operating on the remote unit 105.

The input device 1015, in one embodiment, may include any known computer input device including a touch panel, a button, a keyboard, a stylus, a microphone, or the like. In some embodiments, the input device 1015 may be integrated with the output device 1020, for example, as a touchscreen or similar touch-sensitive display. In some embodiments, the input device 1015 includes a touchscreen such that text may be input using a virtual keyboard displayed on the touchscreen and/or by handwriting on the touchscreen. In some embodiments, the input device 1015 includes two or more different devices, such as a keyboard and a touch panel.

The output device 1020, in one embodiment, is designed to output visual, audible, and/or haptic signals. In some embodiments, the output device 1020 includes an electronically controllable display or display device capable of outputting visual data to a user. For example, the output device 1020 may include, but is not limited to, an LCD display, an LED display, an OLED display, a projector, or similar display device capable of outputting images, text, or the like to a user. As another, non-limiting, example, the output device 1020 may include a wearable display separate from, but communicatively coupled to, the rest of the user equipment apparatus 1000, such as a smart watch, smart glasses, a heads-up display, or the like. Further, the output device 1020 may be a component of a smart phone, a personal digital assistant, a television, a table computer, a notebook (laptop) computer, a personal computer, a vehicle dashboard, or the like.

In certain embodiments, the output device 1020 includes one or more speakers for producing sound. For example, the output device 1020 may produce an audible alert or notification (e.g., a beep or chime). In some embodiments, the output device 1020 includes one or more haptic devices for producing vibrations, motion, or other haptic feedback. In some embodiments, all or portions of the output device 1020 may be integrated with the input device 1015. For example, the input device 1015 and output device 1020 may form a touchscreen or similar touch-sensitive display. In other embodiments, the output device 1020 may be located near the input device 1015.

As discussed above, the transceiver 1025 communicates with one or more V2X UEs. The transceiver 1025 operates under the control of the processor 1005 to transmit messages, data, and other signals and also to receive messages, data, and other signals. For example, the processor 1005 may selectively activate the transceiver (or portions thereof) at particular times in order to send and receive messages.

In various embodiments, the transceiver 1025 is configured to communication with 3GPP access network(s) and/or the non-3GPP access network(s). In some embodiments, the transceiver 1025 implements modem functionality for the 3GPP access network(s) and/or the non-3GPP access network(s). In one embodiment, the transceiver 1025 implements multiple logical transceivers using different communication protocols or protocol stacks, while using common physical hardware.

In one embodiment, the transceiver 1025 includes a first transmitter/receiver pair used to communicate with a mobile communication network over licensed radio spectrum and a second transmitter/receiver pair used to communicate with a mobile communication network over unlicensed radio spectrum. In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 1025, transmitters 1030, and receivers 1035 may be implemented as physically separate components that access a shared hardware resource and/or software resource, such as for example, the network interface 1040.

The transceiver 1025 may include one or more transmitters 1030 and one or more receivers 1035. Although a specific number of transmitters 1030 and receivers 1035 are illustrated, the user equipment apparatus 1000 may have any suitable number of transmitters 1030 and receivers 1035. Further, the transmitter(s) 1030 and the receiver(s) 1035 may be any suitable type of transmitters and receivers. In certain embodiments, the one or more transmitters 1030 and/or the one or more receivers 1035 may share transceiver hardware and/or circuitry. For example, the one or more transmitters 1030 and/or the one or more receivers 1035 may share antenna(s), antenna tuner(s), amplifier(s), filter(s), oscillator(s), mixer(s), modulator/demodulator(s), power supply, and the like.

In various embodiments, the transceiver 1025 is capable of communicating with a mobile core network via an access network. Accordingly, the transceiver 1025 may support at least one network interface 1040. Here, the at least one network interface 1040 facilitates communication with a RAN node, such as an eNB or gNB, for example using the "Uu" interface (e.g., LTE-Uu for eNB, NR-Uu for gNB). Additionally, the at least one network interface 1040 may include an interface used for communications with one or more network functions in the mobile core network, such as a UPF 141, an AMF 143, and/or a SMF 145. For V2X communications, the transceiver 1025 may support a PC5 interface for direct UE-to-UE communication.

In various embodiments, one or more transmitters 1030 and/or one or more receivers 1035 may be implemented and/or integrated into a single hardware component, such as a multi-transceiver chip, a system-on-a-chip, an application-specific integrated circuit ("ASIC"), or other type of hardware component. In certain embodiments, one or more transmitters 1030 and/or one or more receivers 1035 may be implemented and/or integrated into a multi-chip module. In some embodiments, other components such as the network interface 1040 or other hardware components/circuits may be integrated with any number of transmitters 1030 and/or receivers 1035 into a single chip. In such embodiment, the transmitters 1030 and receivers 1035 may be logically configured as a transceiver 1025 that uses one more common control signals or as modular transmitters 1030 and receivers 1035 implemented in the same hardware chip or in a multi-chip module. In certain embodiments, the transceiver 1025 may implement a 3GPP modem (e.g., for communicating via NR or LTE access networks) and a non-3GPP modem (e.g., for communicating via Wi-Fi or other non-3GPP access networks).

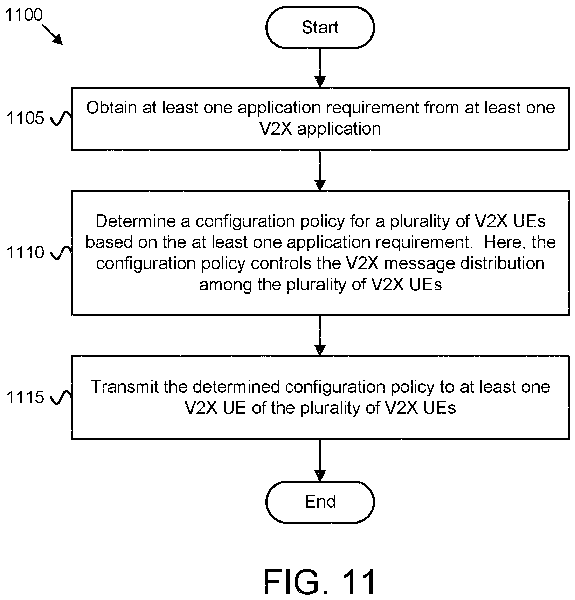

Figure 11 depicts one embodiment of a method 1100 for controlling V2X message distribution, according to embodiments of the disclosure. In various embodiments, the method 1100 is performed by a V2X UE, such as the remote unit 105, the V2X UE-1 205, the V2X UE-2 210, the V2X UE-3 215, the VAE client 207, the first V2X-UE 501, the second V2X-UE 503, and/or the VAE client 710, described above. In some embodiments, the method 1100 is performed by a processor, such as a microcontroller, a microprocessor, a CPU, a GPU, an auxiliary processing unit, a FPGA, or the like.

The method 1100 begins and obtains 1105 at least one application requirement from at least one V2X application. The method 1100 includes determining 1110 a configuration policy for a plurality of V2X UEs based on the at least one application requirement. Here, the configuration policy controls the V2X message distribution among the plurality of V2X UEs. The method 1100 includes transmitting 1115 the determined configuration policy to at least one V2X UE of the plurality of V2X UEs. The method 1100 ends.

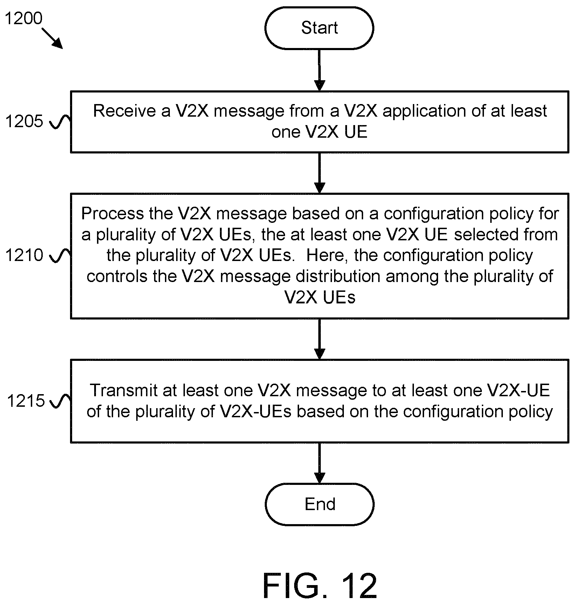

Figure 12 depicts one embodiment of a method 1200 for controlling V2X message distribution, according to embodiments of the disclosure. In various embodiments, the method 1200 is performed by a V2X UE, such as the remote unit 105, the V2X UE-1 205, the V2X UE-2 210, the V2X UE-3 215, the VAE client 207, the first V2X-UE 501, the second V2X-UE 503, the first V2X-UE 601, and/or the VAE client 710, described above. In some embodiments, the method 1200 is performed by a processor, such as a microcontroller, a microprocessor, a CPU, a GPU, an auxiliary processing unit, a FPGA, or the like.

The method 1200 begins and receives 1205 a V2X message from a V2X application of at least one V2X UE. The method 1200 includes processing 1210 the V2X message based on a configuration policy for a plurality of V2X UEs, the at least one V2X UE selected from the plurality of V2X UEs. Here, the configuration policy controls the V2X message distribution among the plurality of V2X UEs. The method 1200 includes transmitting 1215 at least one V2X message to at least one V2X-UE of the plurality of V2X-UEs based on the configuration policy. The method 1200 ends.

Disclosed herein is a first apparatus for controlling V2X message distribution, according to embodiments of the disclosure. The first apparatus may be implemented by a V2X UE, such as the remote unit 105, the V2X UE-1 205, the V2X UE-2 210, the V2X UE-3 215, the first V2X-UE 501, the second V2X-UE 503, and/or the VAE client 710. The first apparatus includes a transceiver that receives at least one application requirement from at least one V2X application and a processor that determines a configuration policy for a plurality of V2X UEs based on the at least one application requirement. Here, the configuration policy controls the V2X message distribution among the plurality of V2X UEs. The processor controls the transceiver to transmit the determined configuration policy to at least one V2X UE of the plurality of V2X UEs.

In some embodiments, the transceiver transmits a notification to the at least one V2X application as feedback corresponding to the at least one application requirement. In some embodiments, the at least one V2X application includes a V2X application server and/or a VAE server. In some embodiments, the configuration policy minimizes a broadcast flood condition among the plurality of V2X UEs.

In various embodiments, the at least one application requirement includes at least one of: an Application Identifier, an External group Identifier, a Transaction Identifier, a V2X UE Identifier, a list of supported message identifiers, a request/notification to determine a configuration policy; Application-to-V2X message mapping information, Application-to-service mapping information, V2X Service Area information, and policy provisioning for applications/services; UE-to-UE relay requirement per application, Candidate relay IDs per application or group of applications, per session Key Performance Indicators, and a Validity Time for the at least one application requirement.

In various embodiments, the configuration policy includes at least one of: a VAE client ID, an Application ID, a Transaction ID, V2X UE ID, an External Group ID, at least one Message ID, at least one Relay ID, a Configuration policy ID, and at least one configuration policy parameter. In certain embodiments, the at least one configuration policy parameter includes at least one of: an indication to activate UE-to-UE relaying, an indication to deactivate UE-to-UE relaying, a current QoS policy, a newly requested QoS policy, a current number of allowed V2X message re-transmissions, a newly requested number of allowed V2X message re-transmissions, an indication to activate a V2X message bundling mode, an indication to deactivate the V2X message bundling mode, and at least one configuration parameters for the V2X message bundling mode.

In various embodiments, the configuration policy includes at least one of: a UE-to-UE broadcast policy and groupcast configuration policy.

In various embodiments, the processor constructs a graph for at least one V2X application and determines the at least one configuration policy based on the processing of the constructed graph. In such embodiments, the graph includes: a plurality of graph vertices indicating a plurality of V2X UEs, a graph edge between each pair of vertices, and at least one weight corresponding to each pair of vertices. In certain embodiments, the at least one weight corresponding to each pair of vertices is calculated based on one or more of: a relative location between nodes, a demand requirement for the V2X messages, an environment condition, and current traffic conditions. In further embodiments, the at least one application requirement includes at least one of: UE-to-UE graphs parameters, thresholds, and degree threshold.

**Disclosed herein is a first method** for controlling V2X message distribution, according to embodiments of the disclosure. The first method may be performed by a V2X UE, such as the remote unit 105, the V2X UE-1 205, the V2X UE-2 210, the V2X UE-3 215, the first V2X-UE 501, the second V2X-UE 503, and/or the VAE client 710. The first method includes obtaining at least one application requirement from at least one V2X application and determining a configuration policy for a plurality of V2X UEs based on the at least one application requirement. Here, the configuration policy controls the V2X message distribution among the plurality of V2X UEs. The first method includes transmitting the determined configuration policy to at least one V2X UE of the plurality of V2X UEs.

In some embodiments, the first method includes transmitting a notification to the at least one V2X application as feedback corresponding to the at least one application requirement. In some embodiments, the at least one V2X application includes a V2X application server and/or a VAE server. In some embodiments, the configuration policy minimizes a broadcast flood condition among the plurality of V2X UEs.

In various embodiments, the at least one application requirement includes at least one of: an Application Identifier, an External group Identifier, a Transaction Identifier, a V2X UE Identifier, a list of supported message identifiers, a request/notification to determine a configuration policy; Application-to-V2X message mapping information, Application-to-service mapping information, V2X Service Area information, and policy provisioning for applications/services; UE-to-UE relay requirement per application, Candidate relay IDs per application or group of applications, per session Key Performance Indicators, and a Validity Time for the at least one application requirement.

In various embodiments, the configuration policy includes at least one of: a VAE client ID, an Application ID, a Transaction ID, V2X UE ID, an External Group ID, at least one Message ID, at least one Relay ID, a Configuration policy ID, at least one configuration policy parameter. In such embodiments, the at least one configuration policy parameter may include at least one of: an indication to activate UE-to-UE relaying, an indication to deactivate UE-to-UE relaying, a current QoS policy, a newly requested QoS policy, a current number of allowed V2X message re-transmissions, a newly requested number of allowed V2X message re-transmissions, an indication to activate a V2X message bundling mode, an indication to deactivate the V2X message bundling mode, and at least one configuration parameters for the V2X message bundling mode.

In various embodiments, the configuration policy includes at least one of: a UE-to-UE broadcast policy and groupcast configuration policy.

In various embodiments, the first method includes constructing a graph for at least one V2X application and determining the at least one configuration policy based on the processing of the constructed graph. In such embodiments, the graph includes: a plurality of graph vertices indicating a plurality of V2X UEs, a graph edge between each pair of vertices, and at least one weight corresponding to each pair of vertices. In certain embodiments, the at least one weight is calculated based on one or more of: a relative location between nodes, a demand requirement for the V2X messages, an environment condition, and current traffic conditions. In further embodiments, the at least one application requirement includes at least one of: UE-to-UE graphs parameters, thresholds, and degree threshold.

Disclosed herein is a second apparatus for controlling V2X message distribution, according to embodiments of the disclosure. The second apparatus may be implemented by a V2X UE, such as the remote unit 105, the V2X UE-1 205, the V2X UE-2 210, the V2X UE-3 215, the first V2X-UE 501, the second V2X-UE 503, the first V2X-UE 601 and/or the VAE client 710. The second apparatus includes a processor that receives a V2X message from a V2X application of at least one V2X UE and processes the V2X message based on a configuration policy for a plurality of V2X UEs, the at least one V2X UE selected from the plurality of V2X UEs, wherein the configuration policy controls the V2X message distribution among the plurality of V2X UEs. The second apparatus includes a transceiver that transmits at least one V2X message to at least one V2X-UE of the plurality of V2X-UEs based on the configuration policy.

In some embodiments, the transceiver transmits a notification to the V2X application of the at least one V2X UE as feedback corresponding to the at least one V2X message. In some embodiments, the configuration policy is based on at least one application requirement of the V2X application. In such embodiments, the transceiver may transmit a notification to the V2X application of the at least one V2X UE as feedback corresponding to the at least one application requirement.

In some embodiments, transmitting the at least one V2X message includes bundling a plurality of V2X messages according to the configuration policy. In some embodiments, the transceiver receives the configuration policy from one of the plurality of V2X UEs.

In some embodiments, the processor relays at least one V2X message. In such embodiments, the configuration policy activates UE-to-UE relaying for at least one V2X application supported at the UE.

In some embodiments, the processor establishes a VAE session with a VAE client running on the at least one V2X UE, wherein transmitting the at least one V2X message includes delivering the at least one V2X message via the VAE session. In such embodiments, a VAE session establishment message includes an identifier for a destination VAE client and at least one parameters for supporting message relay to a destination V2X-UE.

**Disclosed herein is a second method** for controlling V2X message distribution, according to embodiments of the disclosure. The second method may be implemented by a UE, V2X UE, such as the remote unit 105, the V2X UE-1 205, the V2X UE-2 210, the V2X UE-3 215, the first V2X-UE 501, the second V2X-UE 503, the first V2X-UE 601 and/or the VAE client 710. The second method includes receiving a V2X message from a V2X application of at least one V2X UE and processing the V2X message based on a configuration policy for a plurality of V2X UEs, the at least one V2X UE selected from the plurality of V2X UEs. Here, the configuration policy controls the V2X message distribution among the plurality of V2X UEs. The second method includes transmitting at least one V2X message to at least one V2X-UE of the plurality of V2X-UEs based on the configuration policy.

In some embodiments, the second method includes transmitting a notification to the V2X application of the at least one V2X UE as feedback corresponding to the at least one V2X message. In some embodiments, the configuration policy is based on at least one application requirement of the V2X application. In such embodiments, the second method includes transmitting a notification to the V2X application of the at least one V2X UE as feedback corresponding to the at least one application requirement.

In some embodiments, transmitting the at least one V2X message includes bundling a plurality of V2X messages according to the configuration policy. In some embodiments, the second method includes receiving the configuration policy from one of the plurality of V2X UEs.

In some embodiments, the method includes relaying at least one V2X message. In such embodiments, the configuration policy activates UE-to-UE relaying for at least one V2X application supported at the UE.

In some embodiments, the method includes establishing a VAE session with a VAE client running on the at least one V2X UE, wherein transmitting the at least one V2X message includes delivering the at least one V2X message via the VAE session. In such embodiments, a VAE session establishment message includes an identifier for a destination VAE client and at least one parameters for supporting message relay to a destination V2X-UE.

Embodiments may be practiced in other specific forms. The described embodiments are to be considered in all respects only as illustrative and not restrictive. The scope of the invention is indicated by the appended claims.

## Claims

1. A method (1100) performed by a first vehicle-to-everything, V2X, user equipment, UE, the method (1100) comprising:
obtaining (1105) at least one application requirement from at least one V2X application, wherein the at least one V2X application comprises a V2X application server, and wherein the at least one application requirement indicates a V2X Service Area;
determining (1110) a configuration policy for a plurality of V2X UEs based on the at least one application requirement, wherein the configuration policy controls the V2X message distribution among the plurality of V2X UEs, wherein the configuration policy comprises at least one configuration policy parameter, wherein the at least one configuration policy parameter comprises at least one of an indication to activate UE-to-UE relaying and an indication to deactivate UE-to-UE relaying; and
transmitting (1115) the determined configuration policy to at least one V2X UE of the plurality of V2X UEs.

2. The method (1100) of claim 1, further comprising transmitting a notification to the at least one V2X application as feedback corresponding to the at least one application requirement.

3. The method (1100) of claim 1, wherein the at least one application requirement comprises at least one of: an Application Identifier, an External group Identifier, a Transaction Identifier, a V2X UE Identifier, a list of supported message identifiers, a request/notification to determine a configuration policy; Application-to-V2X message mapping information, Application-to-service mapping information, and policy provisioning for applications/services; UE-to-UE relay requirement per application, Candidate relay IDs per application or group of applications, per session Key Performance Indicators, and a Validity Time for the at least one application requirement.

4. The method (1100) of claim 1, wherein the configuration policy comprises at least one of: a V2X application enabler, VAE, client ID, an Application ID, a Transaction ID, V2X UE ID, an External Group ID, at least one Message ID, at least one Relay ID, and a Configuration policy ID.

5. The method (1100) of claim 1, wherein the at least one configuration policy parameter comprises at least one of: a current QoS policy, a newly requested QoS policy, a current number of allowed V2X message re-transmissions, a newly requested number of allowed V2X message re-transmissions, an indication to activate a V2X message bundling mode, an indication to deactivate the V2X message bundling mode, and at least one configuration parameters for the V2X message bundling mode.

6. The method (1100) of claim 1, wherein the configuration policy comprises at least one of: a UE-to-UE broadcast policy and groupcast configuration policy.

7. The method (1100) of claim 1, further comprising:
constructing a graph for at least one V2X application; and
determining the at least one configuration policy based on the processing of the constructed graph, wherein the graph comprises: a plurality of graph vertices indicating a plurality of V2X UEs, a graph edge between each pair of vertices, and at least one weight corresponding to each pair of vertices.

8. The method (1100) of claim 7, wherein the at least one weight is calculated based on one or more of: a relative location between nodes, a demand requirement for the V2X messages, an environment condition, and current traffic conditions.

9. The method (1100) of claim 7, wherein the at least one application requirement comprises at least one of: UE-to-UE graphs parameters, thresholds, and degree threshold.

10. A first vehicle-to-everything, V2X, user equipment, UE, (1000) comprising: at least one memory (1010); and at least one processor (1005) coupled with the at least one memory (1010) and configured to cause the V2X UE (1000) to:
obtain at least one application requirement from at least one V2X application, wherein the at least one V2X application comprises a V2X application server, and wherein the at least one application requirement indicates a V2X Service Area;
determine a configuration policy for a plurality of V2X UEs based on the at least one application requirement, wherein the configuration policy controls the V2X message distribution among the plurality of V2X UEs, wherein the configuration policy comprises at least one configuration policy parameter, wherein the at least one configuration policy parameter comprises at least one of an indication to activate UE-to-UE relaying and an indication to deactivate UE-to-UE relaying; and
transmit the determined configuration policy to at least one V2X UE of the plurality of V2X UEs.

11. The V2X UE (1000) of claim 10, wherein the at least one processor (1005) is further configured to cause the V2X UE (1000) to transmit a notification to the at least one V2X application as feedback corresponding to the at least one application requirement.

12. The V2X UE (1000) of claim 10, wherein the at least one application requirement comprises at least one of: an Application Identifier, an External group Identifier, a Transaction Identifier, a V2X UE Identifier, a list of supported message identifiers, a request/notification to determine a configuration policy; Application-to-V2X message mapping information, Application-to-service mapping information, and policy provisioning for applications/services; UE-to-UE relay requirement per application, Candidate relay IDs per application or group of applications, per session Key Performance Indicators, and a Validity Time for the at least one application requirement.

13. The V2X UE (1000) of claim 10, wherein the configuration policy comprises at least one of: a V2X application enabler, VAE, client ID, an Application ID, a Transaction ID, V2X UE ID, an External Group ID, at least one Message ID, at least one Relay ID, and a Configuration policy ID.

14. The V2X UE (1000) of claim 10, wherein the at least one configuration policy parameter comprises at least one of: a current QoS policy, a newly requested QoS policy, a current number of allowed V2X message re-transmissions, a newly requested number of allowed V2X message re-transmissions, an indication to activate a V2X message bundling mode, an indication to deactivate the V2X message bundling mode, and at least one configuration parameters for the V2X message bundling mode.

15. The V2X UE (1000) of claim 10, wherein the configuration policy comprises at least one of: a UE-to-UE broadcast policy and groupcast configuration policy.

## Patentansprüche

1. Verfahren (1100), das von einem ersten Fahrzeug-zu-Allem-Benutzergerät (V2X-UE) durchgeführt wird, wobei das Verfahren (1100) Folgendes umfasst:
Erlangen (1105) mindestens einer Anwendungsanforderung aus mindestens einer V2X-Anwendung, wobei die mindestens eine V2X-Anwendung einen V2X-Anwendungsserver umfasst und wobei die mindestens eine Anwendungsanforderung einen V2X-Dienstbereich angibt;
Bestimmen (1110) einer Konfigurationsrichtlinie für eine Vielzahl von V2X-UE auf Grundlage der mindestens einen Anwendungsanforderung, wobei die Konfigurationsrichtlinie die Verteilung von V2X-Nachrichten unter der Vielzahl von V2X-UE steuert, wobei die Konfigurationsrichtlinie mindestens einen Konfigurationsrichtlinienparameter umfasst, wobei der mindestens eine Konfigurationsrichtlinienparameter mindestens eine von einer Angabe zur Aktivierung der UE-zu-UE-Weiterleitung und einer Angabe zur Deaktivierung der UE-zu-UE-Weiterleitung umfasst; und
Übertragen (1115) der bestimmten Konfigurationsrichtlinie an mindestens ein V2X-Benutzergerät aus der Vielzahl von V2X-Benutzergeräten.

2. Verfahren (1100) nach Anspruch 1, ferner umfassend Übertragen einer Benachrichtigung an die mindestens eine V2X-Anwendung als Rückmeldung entsprechend der mindestens einen Anwendungsanforderung.

3. Verfahren (1100) nach Anspruch 1, wobei die mindestens eine Anwendungsanforderung mindestens eines von Folgendem umfasst: eine Anwendungs-ID, eine externe Gruppen-ID, eine Transaktions-ID, eine V2X-UE-ID, eine Liste unterstützter Nachrichten-IDs, eine Anfrage/Benachrichtigung zum Bestimmen einer Konfigurationsrichtlinie; Zuordnungsinformationen für Nachrichten von der Anwendung zu V2X, Zuordnungsinformationen von der Anwendung zum Dienst sowie die Bereitstellung von Richtlinien für Anwendungen/Dienste; eine UE-zu-UE-Weiterleitungsanforderung pro Anwendung, Kandidaten-Relais-IDs pro Anwendung oder Gruppe von Anwendungen, Leistungskennzahlen pro Sitzung und eine Gültigkeitsdauer für die mindestens eine Anwendungsanforderung.

4. Verfahren (1100) nach Anspruch 1, wobei die Konfigurationsrichtlinie mindestens eines von Folgendem umfasst: eine V2X-Anwendungs-Enabler-(VAE)-Client-ID, eine Anwendungs-ID, eine Transaktions-ID, eine V2X-UE-ID, eine externe Gruppen-ID, mindestens eine Nachrichten-ID, mindestens eine Relais-ID und eine Konfigurationsrichtlinien-ID.

5. Verfahren (1100) nach Anspruch 1, wobei der mindestens eine Konfigurationsrichtlinienparameter mindestens eines von Folgendem umfasst: eine aktuelle QoS-Richtlinie, eine neu angeforderte QoS-Richtlinie, eine aktuelle Anzahl zulässiger V2X-Nachrichten-Wiederholungsübertragungen, eine neu angeforderte Anzahl zulässiger V2X-Nachrichten-Wiederholungsübertragungen, eine Angabe zur Aktivierung eines V2X-Nachrichtenbündelungsmodus, eine Angabe zur Deaktivierung des V2X-Nachrichtenbündelungsmodus sowie mindestens einen Konfigurationsparameter für den V2X-Nachrichtenbündelungsmodus.

6. Verfahren (1100) nach Anspruch 1, wobei die Konfigurationsrichtlinie mindestens eines von Folgendem umfasst: eine UE-zu-UE-Broadcast-Richtlinie und eine Groupcast-Konfigurationsrichtlinie.

7. Verfahren (1100) nach Anspruch 1, ferner umfassend:
Erstellen eines Graphen für mindestens eine V2X-Anwendung; und
Bestimmen der mindestens einen Konfigurationsrichtlinie auf Grundlage der Verarbeitung des erstellten Graphen, wobei der Graph Folgendes umfasst: eine Vielzahl von Graphknoten, die eine Vielzahl von V2X-UE angeben, eine Graphenkante zwischen jedem Knotenpaar und mindestens eine Gewichtung, die jedem Knotenpaar entspricht.

8. Verfahren (1100) nach Anspruch 7, wobei die mindestens eine Gewichtung auf Grundlage eines oder mehrerer von Folgendem berechnet wird: eine relative Position zwischen Knoten, eine Nachfrageanforderung für die V2X-Nachrichten, eine Umgebungsbedingung und aktuelle Verkehrsbedingungen.

9. Verfahren (1100) nach Anspruch 7, wobei die mindestens eine Anwendungsanforderung mindestens eines von Folgendem umfasst: UE-zu-UE-Graphparameter, Schwellenwerte und einen Grad-Schwellenwert.

10. Erstes Fahrzeug-zu-Allem-Benutzergerät (V2X-UE) (1000), Folgendes umfassend: mindestens einen Speicher (1010); und mindestens einen Prozessor (1005), der mit dem mindestens einen Speicher (1010) gekoppelt und dazu konfiguriert ist, das V2X-UE (1000) zu Folgendem zu veranlassen:
Erlangen mindestens einer Anwendungsanforderung aus mindestens einer V2X-Anwendung, wobei die mindestens eine V2X-Anwendung einen V2X-Anwendungsserver umfasst und wobei die mindestens eine Anwendungsanforderung einen V2X-Dienstbereich angibt;
Bestimmen einer Konfigurationsrichtlinie für eine Vielzahl von V2X-UE auf Grundlage der mindestens einen Anwendungsanforderung, wobei die Konfigurationsrichtlinie die Verteilung von V2X-Nachrichten unter der Vielzahl von V2X-UE steuert, wobei die Konfigurationsrichtlinie mindestens einen Konfigurationsrichtlinienparameter umfasst, wobei der mindestens eine Konfigurationsrichtlinienparameter mindestens eine von einer Angabe zur Aktivierung der UE-zu-UE-Weiterleitung und einer Angabe zur Deaktivierung der UE-zu-UE-Weiterleitung umfasst; und
Übertragen der bestimmten Konfigurationsrichtlinie an mindestens ein V2X-Benutzergerät aus der Vielzahl von V2X-Benutzergeräten.

11. V2X-Benutzergerät (1000) nach Anspruch 10, wobei der mindestens eine Prozessor (1005) ferner dazu konfiguriert ist, das V2X-Benutzergerät (1000) zu veranlassen, eine Benachrichtigung an die mindestens eine V2X-Anwendung als Rückmeldung entsprechend der mindestens einen Anwendungsanforderung zu übertragen.

12. V2X-Benutzergerät (1000) nach Anspruch 10, wobei die mindestens eine Anwendungsanforderung mindestens eines von Folgendem umfasst: eine Anwendungs-ID, eine externe Gruppen-ID, eine Transaktions-ID, eine V2X-UE-ID, eine Liste unterstützter Nachrichten-IDs, eine Anfrage/Benachrichtigung zum Bestimmen einer Konfigurationsrichtlinie; Zuordnungsinformationen für Nachrichten von der Anwendung zu V2X, Zuordnungsinformationen von der Anwendung zum Dienst sowie die Bereitstellung von Richtlinien für Anwendungen/Dienste; eine UE-zu-UE-Weiterleitungsanforderung pro Anwendung, Kandidaten-Relais-IDs pro Anwendung oder Gruppe von Anwendungen, Leistungskennzahlen pro Sitzung und eine Gültigkeitsdauer für die mindestens eine Anwendungsanforderung.

13. V2X-Benutzergerät (1000) nach Anspruch 10, wobei die Konfigurationsrichtlinie mindestens eines von Folgendem umfasst: eine V2X-Anwendungs-Enabler-(VAE)-Client-ID, eine Anwendungs-ID, eine Transaktions-ID, eine V2X-UE-ID, eine externe Gruppen-ID, mindestens eine Nachrichten-ID, mindestens eine Relais-ID und eine Konfigurationsrichtlinien-ID.

14. V2X-UE (1000) nach Anspruch 10, wobei der mindestens eine Konfigurationsrichtlinienparameter mindestens eines von Folgendem umfasst: eine aktuelle QoS-Richtlinie, eine neu angeforderte QoS-Richtlinie, eine aktuelle Anzahl zulässiger V2X-Nachrichten-Wiederholungsübertragungen, eine neu angeforderte Anzahl zulässiger V2X-Nachrichten-Wiederholungsübertragungen, eine Angabe zur Aktivierung eines V2X-Nachrichtenbündelungsmodus, eine Angabe zur Deaktivierung des V2X-Nachrichtenbündelungsmodus sowie mindestens einen Konfigurationsparameter für den V2X-Nachrichtenbündelungsmodus.

15. V2X-UE (1000) nach Anspruch 10, wobei die Konfigurationsrichtlinie mindestens eines von Folgendem umfasst: eine UE-zu-UE-Broadcast-Richtlinie und eine Groupcast-Konfigurationsrichtlinie.

## Revendications

1. Procédé (1100) mis en œuvre par un premier équipement utilisateur, UE, de type « Vehicle-to-Everything » (V2X), le procédé (1100) comprenant :
l'obtention (1105) d'au moins une exigence d'application auprès d'au moins une application V2X, dans lequel l'au moins une application V2X comprend un serveur d'application V2X, et dans lequel l'au moins une exigence d'application indique une zone de service V2X ;
la détermination (1110) d'une politique de configuration pour une pluralité d'UE V2X sur la base de l'au moins une exigence d'application, dans lequel la politique de configuration contrôle la distribution de messages V2X parmi la pluralité d'UE V2X, la politique de configuration comprenant au moins un paramètre de politique de configuration, l'au moins un paramètre de politique de configuration comprenant au moins l'un parmi une indication d'activation du relais d'UE à UE et une indication de désactivation du relais d'UE à UE ; et
la transmission (1115) de la politique de configuration déterminée à au moins un UE V2X de la pluralité d'UE V2X.

2. Procédé (1100) selon la revendication 1, comprenant en outre la transmission d'une notification à l'au moins une application V2X à titre de retour d'information correspondant à l'au moins une exigence d'application.

3. Procédé (1100) selon la revendication 1, dans lequel l'au moins une exigence d'application comprend au moins l'un parmi : un identifiant d'application, un identifiant de groupe externe, un identifiant de transaction, un identifiant d'UE V2X, une liste d'identifiants de messages pris en charge, une requête/notification visant à déterminer une politique de configuration ; des informations de mappage entre l'application et les messages V2X, des informations de mappage entre l'application et le service et un provisionnement de politiques pour les applications/services ; une exigence de relais d'UE à UE par application, des identifiants de relais candidats par application ou groupe d'applications, des indicateurs clés de performance par session, et un temps de validité pour l'au moins une exigence d'application.

4. Procédé (1100) selon la revendication 1, dans lequel la politique de configuration comprend au moins l'un parmi : un identifiant de client d'activateur d'application V2X, VAE, un identifiant d'application, un identifiant de transaction, un identifiant d'UE V2X, un identifiant de groupe externe, au moins un identifiant de message, au moins un identifiant de relais, et un identifiant de politique de configuration.

5. Procédé (1100) selon la revendication 1, dans lequel l'au moins un paramètre de politique de configuration comprend au moins l'un parmi : une politique de QoS actuelle, une politique de QoS nouvellement demandée, un nombre actuel de retransmissions de messages V2X autorisées, un nombre nouvellement demandé de retransmissions de messages V2X autorisées, une indication d'activation d'un mode de regroupement de messages V2X, une indication de désactivation du mode de regroupement de messages V2X, et au moins un paramètre de configuration pour le mode de regroupement de messages V2X.

6. Procédé (1100) selon la revendication 1, dans lequel la politique de configuration comprend au moins l'un parmi : une politique de diffusion UE à UE et une politique de configuration de diffusion de groupe.

7. Procédé (1100) selon la revendication 1, comprenant en outre :
la construction d'un graphe pour au moins une application V2X ; et
la détermination de l'au moins une politique de configuration sur la base du traitement du graphe construit, dans lequel le graphe comprend : une pluralité de sommets de graphe indiquant une pluralité d'UE V2X, une arête de graphe entre chaque paire de sommets, et au moins un poids correspondant à chaque paire de sommets.

8. Procédé (1100) selon la revendication 7, dans lequel l'au moins un poids est calculé sur la base d'un ou plusieurs parmi : une position relative entre les nœuds, une exigence de demande pour les messages V2X, une condition environnementale et des conditions de trafic actuelles.

9. Procédé (1100) selon la revendication 7, dans lequel l'au moins une exigence d'application comprend au moins l'un parmi : des paramètres de graphes d'UE à UE, des seuils et un seuil de degré.

10. Premier équipement utilisateur, UE, V2X (1000) comprenant : au moins une mémoire (1010) ; et au moins un processeur (1005) couplé à l'au moins une mémoire (1010) et configuré pour amener l'UE V2X (1000) à :
obtenir au moins une exigence d'application auprès d'au moins une application V2X, dans lequel l'au moins une application V2X comprend un serveur d'application V2X, et dans lequel l'au moins une exigence d'application indique une zone de service V2X ;
déterminer une politique de configuration pour une pluralité d'UE V2X sur la base de l'au moins une exigence d'application, dans lequel la politique de configuration contrôle la distribution de messages V2X parmi la pluralité d'UE V2X, dans lequel la politique de configuration comprend au moins un paramètre de politique de configuration, dans lequel l'au moins un paramètre de politique de configuration comprend au moins l'un parmi une indication d'activation du relais d'UE à UE et une indication de désactivation du relais d'UE à UE ; et
transmettre la politique de configuration déterminée à au moins un UE V2X de la pluralité d'UE V2X.

11. UE V2X (1000) selon la revendication 10, dans lequel l'au moins un processeur (1005) est en outre configuré pour amener l'UE V2X (1000) à transmettre une notification à l'au moins une application V2X à titre de retour d'information correspondant à l'au moins une exigence d'application.

12. UE V2X (1000) selon la revendication 10, dans lequel l'au moins une exigence d'application comprend au moins l'un parmi : un identifiant d'application, un identifiant de groupe externe, un identifiant de transaction, un identifiant d'UE V2X, une liste d'identifiants de messages pris en charge, une requête/notification visant à déterminer une politique de configuration ; des informations de mappage des messages entre l'application et les messages V2X, des informations de mappage entre l'application et le service, et un provisionnement de politiques pour les applications/services ; une exigence de relais d'UE à UE par application, des identifiants de relais candidats par application ou groupe d'applications, des indicateurs clés de performance par session, et un temps de validité pour l'au moins une exigence d'application.

13. UE V2X (1000) selon la revendication 10, dans lequel la politique de configuration comprend au moins l'un parmi : un identifiant de client d'activateur d'application V2X, VAE, un identifiant d'application, un identifiant de transaction, un identifiant d'UE V2X, un identifiant de groupe externe, au moins un identifiant de message, au moins un identifiant de relais, et un identifiant de politique de configuration.

14. UE V2X (1000) selon la revendication 10,
dans lequel l'au moins un paramètre de politique de configuration comprend au moins l'un parmi : une politique QoS actuelle, une politique QoS nouvellement demandée, un nombre actuel de retransmissions de messages V2X autorisées, un nombre nouvellement demandé de retransmissions de messages V2X autorisées, une indication d'activation d'un mode de regroupement de messages V2X, une indication de désactivation du mode de regroupement de messages V2X, et au moins un paramètre de configuration pour le mode de regroupement de messages V2X.

15. UE V2X (1000) selon la revendication 10, dans lequel la politique de configuration comprend au moins l'un parmi : une politique de diffusion UE à UE et une politique de configuration de diffusion de groupe.
